(19) Europäisches Patentamt
European Patent Office
Office européen des brevets

(11) EP 0 946 617 B1

(12) EUROPÄISCHE PATENTSCHRIFT

(45) Veröffentlichungstag und Bekanntmachung des Hinweises auf die Patenterteilung: **27.03.2002 Patentblatt 2002/13**

(21) Anmeldenummer: **97954448.3**

(22) Anmeldetag: **19.12.1997**

(51) Int Cl.[7]: **C08F 220/04**, C08F 220/28, C08F 220/58, C04B 24/26

(86) Internationale Anmeldenummer: **PCT/EP97/07205**

(87) Internationale Veröffentlichungsnummer: **WO 98/28353 (02.07.1998 Gazette 1998/26)**

(54) **VERWENDUNG VON POLYMERISATEN, DIE CARBOXYLGRUPPEN UND POLYALKYLENOXIDETHER-SEITENKETTEN ENTHALTEN, ALS ADDITIVE IN MINERALISCHEN BAUSTOFFEN**

THE USE OF POLYMERS CONTAINING CABOXYL GROUPS AND POLYALKYLENE OXIDE ETHER SIDE-CHAINS AS ADDITIVES IN MINERAL BUILDING MATERIALS

UTILISATION, COMME ADDITIFS DANS DES MATERIAUX DE CONSTRUCTION MINERAUX, DE POLYMERISATS CONTENANT DES GROUPES CARBOXYLE ET DES CHAINES LATERALES POLYALKYLENOXYDETHER

(84) Benannte Vertragsstaaten: **AT BE CH DE ES FR GB IT LI NL SE**

(30) Priorität: **20.12.1996 DE 19653524**

(43) Veröffentlichungstag der Anmeldung: **06.10.1999 Patentblatt 1999/40**

(73) Patentinhaber: **BASF AKTIENGESELLSCHAFT**
**67056 Ludwigshafen (DE)**

(72) Erfinder:
- **KISTENMACHER, Axel**
  **D-67061 Ludwigshafen (DE)**
- **KLINGELHÖFER, Paul**
  **D-68165 Mannheim (DE)**
- **PERNER, Johannes**
  **D-67434 Neustadt (DE)**
- **HARTMANN, Markus**
  **D-67433 Neustadt (DE)**
- **RULAND, Alfred**
  **D-69198 Schriesheim (DE)**

(74) Vertreter: **Kinzebach, Werner, Dr.**
**Ludwigsplatz 4**
**67059 Ludwigshafen (DE)**

(56) Entgegenhaltungen:
**EP-A- 0 692 465**
**DE-A- 3 603 392**
**US-A- 4 808 641**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft die Verwendung von Polymerisaten, die Carboxylgruppen und Polyalkylenether-Seitenketten enthalten, als Additive in mineralischen Baustoffen.

Unter mineralischen Baustoffen sind Zubereitungen zu verstehen, die als wesentliche Bestandteile mineralische Bindemittel wie Kalk, und/oder insbesondere Zement sowie als Zuschläge dienende Sande, Kiese, gebrochene Gesteine oder sonstige Füllstoffe z.B. natürliche oder synthetische Fasern, enthalten. Die mineralischen Baustoffe werden in der Regel durch Zusammenmischung der mineralischen Bindemittel und der Zuschläge zusammen mit Wasser in eine gebrauchsfertige Zubereitung überführt, die, wenn sie sich selbst überlassen ist, mit der Zeit sowohl an der Luft als auch unter Wasser steinartig aushärtet.

Zur Einstellung des gewünschten anwendungstechnischen Eigenschaftsprofils der gebrauchsfertigen Zubereitung ist es in der Regel erforderlich, eine größere Menge Wasser zu verwenden, als für den nachfolgenden Dehydratations- bzw. Aushärtungsprozess notwendig ist. Dies ist insbesondere dann der Fall, wenn eine hohe Fließfähigkeit der gebrauchsfertigen Zubereitung gewünscht ist, beispielsweise dann, wenn sie gepumpt werden soll. Durch das überschüssige, später verdunstende Wasser werden im Baukörper Hohlräume gebildet, die zu einer signifikanten Verschlechterung der mechanischen Eigenschaften und Beständigkeiten der Baukörper führen.

Zur Verringerung des überschüssigen Wasseranteils bei einem vorgegebenen Eigenschaftsprofil werden in der Regel der gebrauchsfertigen Zubereitung Zusatzmittel, die im allgemeinen als Wasserreduktionsmittel, Fließmittel und Verflüssiger bezeichnet werden, zugesetzt. Der Stand der Technik empfiehlt beispielsweise als Verflüssiger für gebrauchsfertige Zubereitungen mineralischer Baustoffe folgende Verbindungen:

> Naphthalinsulfonsäure-Formaldehyd-Kondensate (EP-A 402 319), Melamin-Formaldehyd-Polykondensate (EP-A 402 319), Ligninsulfonate (EP-A 402 319) sowie Homo- und Copolymere von Carbonsäuren und Dicarbonsäuren mit Styrol (EP-A 306 449 und US-A 3 952 805) bzw. Isobuten oder Diisobuten (DE-A 37 16 974, EP-A 338 293, DE-A 39 25 306, US-A 4 586 960, US-A 4 042 407 und US-A 4 906 298).

Die EP 97 513 beschreibt die Verwendung von Copolymerisaten aus ungesättigten Carbonsäuren und Hydroxyalkylestern ungesättigter Carbonsäuren als Weichmacherzusätze in zementösen Massen.

Die Verwendung von Copolymerisaten, die in einpolymerisierter Form Carbonsäuremonomere und Polyalkylenoxidester der Acrylsäure und der Methacrylsäure enthalten, als Verflüssiger für zementöse Massen ist aus der DE-A 44 20 444 bekannt. Die Verflüssiger müssen jedoch zusammen mit Antischaummitteln auf Oxialkylenbasis eingesetzt werden, um die gewünschten Anwendungseigenschaften zu erreichen.

Die Verwendung von vernetzten Polymerisaten aus ethylenisch ungesättigten Polyoxialkylenethern, mehrfach ungesättigten Alkenylethern und Maleinsäureanhydrid als Verflüssiger für zementöse Massen wird in der EP 619 277 beschrieben. Die für die gewünschten Eigenschaften zwingend erforderlichen polyfunktionellen Verbindungen sind jedoch aufwendig in ihrer Herstellung und verteuern das Produkt.

Die DE-A 195 13 126 beschreibt Copolymere auf der Basis von Oxialkylenglykol-Alkenylethern und ungesättigten Dicarbonsäurederivaten, die wenigstens ein weiteres Monomer ausgewählt unter mehrfach ungesättigten Monomeren oder Diestern ethylenisch ungesättigter Carbonsäuren einpolymerisiert enthalten. Derartige Terpolymere eignen sich ebenfalls zum Verflüssigen zementöser Massen.

Die DE-A 4304 109 und die EP-A 610 699 beschreiben Copolymere auf der Basis von Maleinsäurederivaten und Vinylmonomeren, wobei die Maleinsäurederivate Maleinimide und Maleinsäurehalbamide sowie zwingend einen Halbester der Maleinsäure mit einem Polyalkylenoxid Alkohol umfassen. Derartige Polymerisate sind ebenfalls als Verflüssiger für zemententhaltende mineralische Baustoffe geeignet. Es erscheint jedoch wünschenswert, das in den Beispielen für fließfähige Zubereitungen angegebene Wasser/Zement-Verhältnis von 0,5 noch weiter zu verringern, um eine höhere Festigkeit des abgebundenen Betons zu erreichen.

Die EP-A 537 870 beschreibt Copolymerisate aus ethylenisch ungesättigten Carbonsäuren und/oder Sulfonsäuren mit Monomeren, die Polyetherfunktionen enthalten. Als Monomere werden beispielsweise Allylether von Polyethylenglykol mit bis zu 11 Ethylenoxideinheiten beschrieben. Die Polymere werden vorzugsweise in Gegenwart von Natriumhypophosphit hergestellt.

Zusammenfassend kann gesagt werden, daß die aus dem Stand der Technik bekannten Additive für mineralische Baustoffe noch der Verbesserungen bedürfen. Insbesondere ihre verflüssigende Wirkung bei niedrigen Wasser/Bindemittel-Verhältnissen ist in der Regel noch nicht ausreichend oder bleibt nur über eine kurze Zeitspanne erhalten. Eine höhere Dosierung des Verflüssigers kann diesen Mangel zwar teilweise ausgleichen. Dies hat aber neben der Unwirtschaftlichkeit einer solchen Vorgehensweise erhebliche Einbußen bei der erreichbaren mechanischen Festigkeit oder zumindest nicht akzeptable Verzögerungen der Abbindegeschwindigkeiten zur Folge.

Der vorliegenden Erfindung liegt somit die Aufgabe zugrunde, Additive für mineralische Baustoffe zur Verfügung zu stellen, die insbesondere hinsichtlich ihrer verflüssigenden Wirkung Vorteile gegenüber den bekannten Additiven für mineralische Baustoffe aufweisen. Erwünscht ist insbesondere, daß bei niedrigen Wasser/Bindemittel-Verhältnissen keine Nachteile im Abbindeverhalten oder hinsichtlich der Festigkeit der abgebundenen Baustoffe in Kauf genommen werden müssen.

Überraschenderweise wurde nun gefunden, daß eine Reihe von wasserlöslichen oder in Wasser dispergierbaren Polymerisaten, die Carboxylgruppen und Seitenketten mit Polyetherstruktur aufweisen, vorteilhafte Eigenschaften als Additive für mineralische Baustoffe aufweisen, wenn man sie durch Polymerisation ethylenisch ungesättigter Monomere mit Carboxylgruppen und/oder Seitenketten mit Polyetherstruktur in Gegenwart von Phosphor enthaltenden Verbindungen herstellt. Alternativ können derartige Polymerisate durch polymeranaloge Umsetzung von Polymerisaten, die in Gegenwart von Phosphor enthaltenden Verbindungen hergestellt worden sind und die reaktive Gruppen enthalten, hergestellt werden.

Demnach betrifft die vorliegende Erfindung die Verwendung wasserlöslicher oder in Wasser dispergierbarer Polymerisate, die Carboxylgruppen, gegebenenfalls in latenter Form, und Seitenketten der allgemeinen Formel I,

$$-X-Y[O(Alk-O)_n-R]_k \qquad (I)$$

enthalten, worin

k für 1, 2, 3 oder 4 steht,

Y eine Einfachbindung oder eine $C_1$-$C_4$-Alkyleneinheit bedeutet oder, wenn k ≠ 1 auch

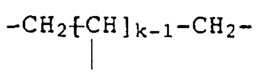

bedeuten kann,

X für eine Einfachbindung oder eine Carbonylgruppe steht oder, wenn Y keine Einfachbindung ist, auch O, NR',

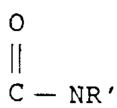 oder 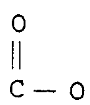

bedeuten kann, worin für R' für Wasserstoff, $C_1$-$C_{20}$-Alkyl, $C_5$-$C_{10}$-Cycloalkyl, $C_6$-$C_{20}$-Aryl, $C_1$-$C_{20}$-Alkanoyl, $C_7$-$C_{21}$-Aroyl, $(Alk-O)_n$-R oder -Alk'-O$(Alk-O)_n$-R steht,

Alk für $C_2$-$C_4$-Alkylen steht,

Alk' für $C_1$-$C_4$-Alkylen steht, das gegebenenfalls auch eine OH-Gruppe trägt,

n für eine Zahl im Bereich von 1 bis 300 steht wobei n ≥ 12 ist, wenn X für eine Einfachbindung steht, und n ≥ 2 ist, wenn X für eine Carbonylgruppe und Y für eine Einfachbindung steht,

R Wasserstoff, $C_1$-$C_{20}$-Alkyl, $C_5$-$C_8$-Cycloalkyl, $C_6$-$C_{20}$-Aryl, $C_1$-$C_{20}$-Alkanoyl oder $C_7$-$C_{21}$-Aroyl bedeutet,

wobei die Polymerisate durch radikalische Copolymerisation ethylenisch ungesättigter Monomere A, die Carboxylgruppen enthalten, und ethylenisch ungesättigter Monomere B, die Seitenketten der allgemeinen Formel I aufweisen, sowie gegebenenfalls weiterer Monomere C in Gegenwart von 0.1 bis 50 Gew.%, bezogen auf die zu polymerisierenden Monomere, Phosphor enthaltenden Verbindungen,
oder durch radikalische Copolymerisation ethylenisch ungesättigter Monomere, die reaktive funktionelle Gruppen aufweisen, gegebenenfalls zusammen mit Monomeren A und/oder B und gegebenenfalls weiteren Monomeren C, in Gegenwart von 0.1 bis 50 Gew.%, bezogen auf die zu polymerisierenden Monomere, Phosphor enthaltenden Verbindungen und nachträgliche Umwandlung wenigstens eines Teils der reaktiven funktionellen Gruppen in Seitenketten der allgemeinen Formel I und/oder Carboxylgruppen erhältlich sind,

als Additive in mineralischen Baustoffen.

Gegenstand der vorliegenden Erfindung sind weiterhin die verwendeten Polymerisate, sofern $n \geq 5$ ist, wenn X für eine Carbonylgruppe steht und $n > 12$ ist, wenn X für eine Einfachbindung steht. Gegenstand der vorliegenden Erfindung ist auch ein Verfahren zur Herstellung dieser Polymerisate.

Im folgenden versteht man unter $C_1$-$C_{20}$-Alkyl lineare oder verzweigte, gesättigte Kohlenstoffketten mit bis zu 20, vorzugsweise mit 1 bis 10 Kohlenstoffatomen, z.B. Methyl, Ethyl, n-Propyl, i-Propyl, n-Butyl, s-Butyl, i-Butyl, t-Butyl, n-Pentyl, s-Pentyl, Neopentyl, 1-, 2-, 3-Methylpentyl, n-Hexyl, 2-Ethylhexyl, n-Octyl, 3-Propylheptyl, 1-Decyl, 1-Dodecyl etc.

$C_1$-$C_4$-Alkylen umfaßt z.B. Methylen, 1,2-Ethylen, 1,2-Propylen, 1,3-Propylen, 1,2-Butylen, 1,3-Butylen, 1,4-Butylen und 2,3-Butylen. Entsprechendes gilt für $C_2$-$C_4$-Alkylen.

$C_5$-$C_{10}$-Cycloalkyl steht für cycloaliphatische Reste, die insgesamt 5 bis 10 Kohlenstoffatome aufweisen, ausgewählt unter Cyclopentyl, Cyclohexyl, Cycloheptyl und Cyclooctyl, die gegebenenfalls mit 1, 2, 3 oder 4 $C_1$-$C_4$-Alkylgruppen, insbesondere mit Methylgruppen substituiert sind.

$C_6$-$C_{20}$-Aryl steht für Phenyl oder Naphthyl, die gegebenenfalls mit 1,2,3 oder 4 $C_1$-$C_{10}$-Alkylgruppen, $C_1$-$C_4$-Alkyloxygruppen, Hydroxygruppen, Halogen, z.B. Chlor, substituiert sind und bis zu 20 Kohlenstoffatome aufweisen können.

$C_7$-$C_{20}$-Aralkyl steht für Arylgruppen, die über eine $C_1$-$C_4$-Alkyleneinheit gebunden sind und die 7 bis 20 Kohlenstoffatome aufweisen können, z.B. für Benzyl oder Ethylphenyl. $C_1$-$C_{20}$-Alkanoyl steht für einen Rest, der sich von einer aliphatischen Carbonsäure ableitet, und umfaßt somit neben Formyl solche Alkylreste, die über eine Carbonylgruppe gebunden sind. $C_7$-$C_{21}$-Aroyl entspricht $C_7$-$C_{21}$-Arylcarbonyl und steht für einen Arylrest, der über eine Carbonylgruppe gebunden ist und leitet sich somit von Derivaten der Benzoesäure und der Naphthoesäure ab.

Mit Carboxylgruppen sind neben Carbonsäuregruppen (COOH) auch neutralisierte Carbonsäuregruppen ($COO^-$) gemeint. Den Carboxylgruppen gleichwertig sind Anhydridgruppen, da diese unter den Anwendungsbedingungen - Baustoffzubereitungen sind in der Regel alkalisch und fördern die Hydrolyse der Anhydridgruppen - als Carboxylgruppen vorliegen. Demnach gehören Polymerisate, die anstelle der Carboxylgruppen Anhydridgruppen als Carboxylgruppen in latenter Form aufweisen, ebenfalls zum Gegenstand der vorliegenden Erfindung.

Die nachfolgend aufgeführten Formeln sind so aufzufassen, dass der Carbonylkohlenstoff, gegebenenfalls über eine Methylengruppe mit der Polymerkette und das Heteroatom mit Y verbunden ist:

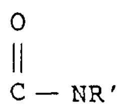 oder 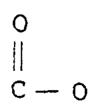

Reaktive funktionelle Gruppen umfassen alle Gruppen, die mit Wasser, Ammoniak, Hydroxylgruppen von Alkoholen und $NH_2$-Gruppen von primären Aminen unter Bindungsbildung reagieren können. Sie umfassen insbesondere Oxirangruppen und cyclische Anhydridgruppen.

Unter den Phosphor enthaltenden Verbindungen sind sowohl anorganische wie auch organische Phosphorverbindungen zu verstehen. Die erfindungsgemäß einzusetzenden anorganischen Phosphorverbindungen umfassen vorzugsweise die Oxosäuren des Phosphors und deren im Reaktionsmedium löslichen, dispergierbaren Salze, vorzugsweise deren Alkali-, Erdalkali- oder Ammoniumsalze.

Beispiele für geeignete anorganische Phosphorverbindungen sind:
Phosphinsäure ($H_3PO_2$) und die daraus abgeleiteten Salze wie Natriumphosphinat-(Monohydrat), Kaliumphosphinat, Ammoniumphosphinat; Hypodiphosphonsäure ($H_4P_2O_4$) und die daraus abgeleiteten Salze; Phosphonsäure ($H_3PO_3$) und die daraus abgeleiteten Salze wie Natriumhydrogenphosphonat, Natriumphosphonat, Kaliumhydrogenphosphonat, Kaliumphosphonat, Ammoniumhydrogenphosphonat, Ammoniumphosphonat; Diphosphonsäure ($H_4P_2O_5$) und die daraus abgeleiteten Diphosphonate; Hypodiphosphorsäure ($H_4P_2O_6$) und die daraus abgeleiteten Hypodiphosphate; Phosphorsäure ($H_3PO_4$) und die daraus abgeleiteten Dihydrogenphosphate, Hydrogenphosphate und Phosphate; Diphosphorsäure ($H_4P_2O_7$) und die daraus abgeleiteten Diphosphate sowie Polyphosphorsäuren und deren Salze, wie z.B. Natriumtriphosphat.

Vorzugsweise werden die erfinungsgemäßen Polymerisate in gegenwart von Phosphinsäure ($H_3PO_2$)oder den daraus abgeleiteten Salzen wie Natriumphosphinat-Monohydrat, Kaliumphosphinat, Ammoniumphosphinat und/oder Phosphonsäure ($H_3PO_3$) sowie den daraus abgeleiteten Salzen z.B. Natriumhydrogenphosphonat, Natriumphosphonat, Kaliumhydrogenphosphonat, Kaliumphosphonat, Ammoniumhydrogenphosphonat, Ammoniumphosphonat, hergestellt. Besonders bevorzugt wird Natriumphosphinat-Monohydrat und/oder Phosphonsäure.

Phosphorenthaltende Verbindungen umfassen weiterhin auch phosphororganische Verbindungen wie beispielsweise Harnstoffphosphat, Methandiphosphonsäure, Propan-1,2,3-triphosphonsäure, Butan-1,2,3,4-tetraphosphonsäure, Polyvinylphosphonsäure, 1-Aminoethan-1,1-diphosphonsäure, Diethyl-(1-hydroxyethyl)phosphonat, Diethylhydroxymethylphosphonat, 1-Amino-1-phenyl-1,1-diphosphonsäure, Aminotrismethylentriphosphonsäure, Ethylendiaminotetramethylentetra-phosphonsäure, Ethylentriaminopentamethylenpentaphosphonsäure, 1-Hydroxyethan-1,1-diphosphonsäure, Phosphonoessig- und Phosphonopropionsäure und deren Salze, Diethylphosphit, Dibutylphosphit, Diphenylphosphit, Triethylphosphit, Tributylphosphit, Triphenylphosphit und Tributylphosphat.

Auch ethylenisch ungesättigte Phosphorverbindungen wie Vinylphosphonat, Vinylphosphonatmethylester, Vinylphosphonatethylester, Vinylphosphat, Allylphosphonat oder Allylphosphat sind geeignet.

Bevorzugte phosphororganische Verbindungen sind 1-Hydroxyethan-1,1-diphosphonsäure, sowie deren Dinatrium- und Tetranatriumsalz, Aminotrismethylentriphosphonsäure sowie das Pentanatriumsalz und Ethylendiaminotetramethylentetraphosphonsäure sowie deren Salz.

Oftmals ist es vorteilhaft, mehrere Phosphorverbindungen zu kombinieren, wie beispielsweise Natriumphosphinat-Monohydrat mit Phosphonsäure, Phosphonsäure mit 1-Hydroxyethan-1,1-diphosphonsäure-Dinatriumsalz und/oder Aminotrimethylentriphosphonsäure und/oder 1-Hydroxyethan-1,1-diphosphonsäure. Sie können in jedem beliebigen Verhältnis miteinander gemischt und bei der Polymerisation eingesetzt werden.

Die Menge an Phosphor enthaltender Verbindung beträgt, bezogen auf die zu polymerisierenden Monomere in der Regel 0,1 bis 50 Gew.-%, vorzugsweise 0,5 bis 25 Gew.-%, insbesondere 1 bis 20 Gew.-%, besonders bevorzugt 2 bis 15 Gew.-% und ganz besonders bevorzugt 5 bis 10 Gew.%.

Für die erfindungsgemäße Wirkung der Polymerisate ist es weiterhin von Vorteil, wenn die Seitenkette der allgemeinen Formel I eine gewisse Länge aufweist. So steht n in der allgemeinen Formel I vorzugsweise für eine Zahl ≥ 5, insbesondere ≥ 10 und besonders bevorzugt ≥ 15. Die Polymerisate weisen ein Wirkungsoptimum auf, wenn n im Bereich von 20 bis 60 liegt, jedoch sind auch Polymerisate mit kürzeren oder längeren Seitenketten der allgemeinen Formel I als Additive für mineralische Baustoffe geeignet. Dabei ist weitgehend unerheblich, ob die Einheit $-(Alk-O)_n-$ für eine einheitlich aufgebaute Polyalkylenoxideinheit steht oder aus unterschiedlichen Alkylenoxideinheiten aufgebaut ist. In diesem Fall können die Alkylenoxideinheiten statistisch oder blockartig in der Polyalkylenoxideinheit $-(Alk-O)_n-$ angeordnet sein.

Bevorzugt steht Alk für 1,2-Propylen, 1,2-Butylen und insbesondere für 1,2-Ethylen. Die Kopfeinheit R der Polyalkylenoxidseitenkette der allgemeinen Formel I ist vorzugsweise Wasserstoff oder $C_1$-$C_4$-Alkyl, insbesondere Methyl oder Ethyl. In der allgemeinen Formel I steht Y vorzugsweise für eine Einfachbindung, eine $C_1$-$C_4$-Alkyleneinheit (Alk'), oder gegebenenfalls auch für einen trivalenten Rest, der sich von Glycerin ableitet.

Besonders bevorzugt sind Polymerisate, worin k = 1 ist und X für eine Carbonylfunktion steht, oder, wenn Alk' für eine $C_1$-$C_4$-Alkyleneinheit steht, auch

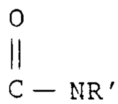
oder
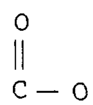

bedeuten kann, worin R' die oben genannten Bedeutungen besitzt und insbesondere für Wasserstoff, $C_1$-$C_4$-Alkyl, Benzyl oder Phenyl steht. Ganz besonders bevorzugt sind Polymerisate, worin X für eine Carbonylfunktion steht und Y eine Einfachbindung bedeutet.

Weiterhin ist es von Vorteil, wenn das gewichtsmittlere Molekulargewicht der Polymerisate im Bereich von 1.000 bis 300.000 Dalton, vorzugsweise im Bereich von 5.000 bis 150.000 Dalton, insbesondere im Bereich von 8.000 bis 100.000 Dalton, und ganz besonders bevorzugt im Bereich von 12.000 bis 70.000 Dalton liegt.

In einer bevorzugten Ausführungsform der vorliegenden Erfindung werden Polymerisate verwendet, die durch radikalische Copolymerisation von 2 bis 95 Gew.%, vorzugsweise 3 bis 50 Gew.% und insbesondere 10 bis 40 Gew. %, bezogen auf die zu polymerisierenden Monomere, ethylenisch ungesättigter Monomere A, die Carboxylgruppen enthalten und 5 bis 98 Gew.%, vorzugsweise 50 bis 97 Gew.% und insbesondere 60 bis 90 Gew.% ethylenisch ungesättigter Monomere B, die Seitenketten der allgemeinen Formel I aufweisen, sowie gegebenenfalls bis zu 50 Gew.%, vorzugsweise bis 30 Gew.% und insbesondere bis 20 Gew.% weiterer Monomere C in Gegenwart von 0,1 bis 50 Gew.-%, vorzugsweise 0,5 bis 25 Gew.-%, insbesondere 1 bis 20 Gew.-%, besonders bevorzugt 2 bis 15 Gew.-% und ganz besonders bevorzugt 5 bis 10 Gew.% der zuvor genannten Phosphor enthaltenden Verbindungen erhältlich sind (Ausführungsform 1).

In dieser Ausführungsform sind die Monomere A ausgewählt unter ethylenisch ungesättigten $C_3$-$C_6$-Monocarbonsäuren wie Acrylsäure, Methacrylsäure, Crotonsäure, Isocrotonsäure, 2-Ethylpropensäure; ethylenisch ungesättigten $C_4$-$C_6$-Dicarbonsäuren wie Maleinsäure, Fumarsäure, Itaconsäure, Citraconsäure sowie den Salzen der genannten Mono- und Dicarbonsäuren, insbesondere den Natrium-, Kalium- oder Ammoniumsalzen; den Anhydriden der ethylenisch ungesättigten $C_4$-$C_6$-Dicarbonsäuren, z. B. Maleinsäureanhydrid, Itaconsäureanhydrid, Citraconsäureanhydrid; den Halbestern der ethylenisch ungesättigten $C_4$-$C_6$-Dicarbonsäuren mit $C_1$-$C_{12}$-Alkanolen oder Alkoholen der allgemeinen Formel II

$$H\{O)_p-Y-O\{Alk-O)_n-R \quad (II)$$

worin Y, Alk, R und n die zuvor genannten Bedeutungen besitzen und p = 1 ist oder, wenn Y für eine Einfachbindung steht, p = 0 ist, z.B. Maleinsäuremonomethylester, Maleinsäuremono-n-butylester, Fumarsäuremono-n-butylester, Mono(methylpolyethylenglykol)maleinat; den Halbamiden der ethylenisch ungesättigten $C_4$-$C_6$-Dicarbonsäuren mit $NH_3$, mit primären $C_1$-$C_{12}$-Alkylaminen oder mit Aminen der allgemeinen Formel III oder IIIa

$$H_2N-Alk'-O\{Alk-O)_n-R \quad (III)$$

$$H_2N\{Alk-O)_n-R \quad (IIIa)$$

worin Alk, Alk', n und R die zuvor genannten Bedeutungen besitzen, beispielsweise Methylpolyethylenglykolaminmaleinsäure-Halbamid.

In dieser Ausführungsform der vorliegenden Erfindung sind die Monomere B vorzugsweise ausgewählt unter den Estern monoethylenisch ungesättigter $C_3$-$C_6$-Monocarbonsäuren mit Alkoholen der allgemeinen Formel II und den Amiden monoethylenisch ungesättigter $C_3$-$C_6$-Monocarbonsäuren mit Aminen der allgemeinen Formel III oder IIIa. Beispiele für geeignete Monomere B umfassen: Hydroxyethyl(meth) acrylat, Hydroxyethyl(meth)acrylamid, Hydroxypropyl (meth)acrylat, Hydroxypropyl(meth)acrylamid, Polyethylenglykolmono(meth) acrylat, Polyethylenglykolmono (meth)acrylamid, Polypropylenglykolmono(meth)acrylat, Polybutylenglykolmono(meth)acrylat, Polyethylenglykolpolypropylenglykolmono(meth)acrylat, Polyethylenglykol-polybutylenglykolmono(meth)acrylat, Polypropylenglykolpolybutylenglykolmono(meth)acrylat, Polyethylenglykol-polypropylenglykol-polybutylenglykolmono(meth)acrylat, Methoxypolyethylenglykolmono(meth)acrylat, Methoxypolyethylenglykolmono(meth)acrylamid, Methoxypolypropylenglykolmono(meth)acrylat, Methoxypolybutylenglykolmono(meth)acrylat, Methoxypolybutylenglykolmono(meth)acrylat, Methoxypolyethylenglykolpolypropylenglykolmono(meth)acrylat, Methoxy-polyethylenglykolpolybutylenglykolmono(meth)acrylat, Methoxypolypropylenglykol-polybutylenglykolmono(meth)acrylat, Methoxypolyethylenglykol-polypropylenglykol-polybutylenglykolmono(meth)acrylat, Ethoxypolyethylenglykolmono(meth)acrylat, Ethoxypolyethylenglykolmono(meth)acrylamid, Ethoxypolypropylenglykolmono(meth)acrylat, Ethoxypolybutylenglykolmono(meth)acrylat, Ethoxypolyethylenglykol-polypropylenglykolmono(meth)acrylat, Ethoxypolyethylenglykol-polybutylenglykolmono(meth)acrylat, Ethoxypolypropylenglykol-polybutylenglykolmono(meth)acrylat und Ethoxypolyethylenglykol-polypropylenglykol-polybutylenglykolmono(meth)acrylat.

Besonders bevorzugte Monomere B dieser Ausführungsform der Erfindung sind die Ester der Acrylsäure und insbesondere der Methacrylsäure mit den Alkoholen der allgemeinen Formel II. Besonders bevorzugt sind die Ester jener Alkohole, worin Y für eine Einfachbindung steht und n für eine Zahl ≥ 5, insbesondere ≥ 10 und besonders bevorzugt ≥ 15 steht. Ganz besonders bevorzugt sind die Ester solcher Alkohole der allgemeinen Formel II, worin Y für eine Einfachbindung steht und n im Bereich von 20 bis 60 liegt.

In dieser Ausführungsform sind die bevorzugten Monomere A Acrylsäure und insbesondere Methacrylsäure sowie deren Natrium-, Kalium- und Ammoniumsalze.

Besonders bevorzugt werden Polymere verwendet, die aus Methacrylsäure und Methylpolyethylenglykolmethacrylat aufgebaut sind. Ganz besonders bevorzugt werden Polymerisate worin das Methylpolyethylenglykolmethacrylat 10 bis 60, insbesondere 21 bis 55 Ethylenoxideinheiten aufweist. Bevorzugt stehen Methacrylsäure und Methylpolyethylenglykolmethacrylat im Gewichtsverhältnis von 1:9 bis 4:6 und besonders bevorzugt etwa 2:8.

Geeignete Monomere C umfassen als Monomere C1 $C_1$-$C_{10}$-Alkylester der Acrylsäure und der Methacrylsäure, z. B. Methyl(meth)acrylat, Ethyl(meth)acrylat, n-Propyl(meth)acrylat, i-Propyl(meth)acrylat, n-Butyl(meth)acrylat, i-Butyl(meth)acrylat, t-Butyl(meth)acrylat, n-Pentyl(meth)acrylat, n-Hexyl(meth)acrylat, n-Heptyl(meth)acrylat, n-Octyl(meth)acrylat, 2-Ethylhexy(meth)acrylat, n-Decyl(meth)acrylat, 2-Propylheptyl(meth)acrylat; die Vinyl- und Allylester von $C_1$-$C_{12}$-Monocarbonsäuren, z. B. Vinyl- bzw. Allylformiat, -acetat, -propionat und -butyrat; Vinyl- und Allylether von $C_1$-$C_{10}$-Alkanolen, z.B. Methylvinylether, Ethylvinylether, n-Propylvinylether, Isobutylvinylether, 2-Ethylhexylvinylether und die entsprechenden Allylether; die Amide der ethylenisch ungesättigten Carbonsäuren, insbesondere die Acrylamide und die Methacrylamide wie z. B. Arcrylamid, Methacrylamid, N-tert.-Butylacrylamid, N-Methyl(meth) acrylamid.

Die Monomere C umfassen weiterhin als Monomere C2 N-Vinylverbinungen wie Vinylacetamid, N-Vinylpyrolidon, N-Vinylimidazol, N-Vinylcaprolactam und als Monomere C3 Acrylnitril, Allylalkohol, Vinylpyridin, Acrolein und Methacrolein.

Weiterhin umfassen die Monomere C als Monomere C4 vinylaromatische Verbindungen wie Styrol, $\alpha$-Methylstyrol, Vinyltoluol, Vinylchlorbenzol etc.; lineare oder verzweigte $C_2$-$C_{12}$-Olefine wie Ethen, Propen, 1-Buten, 2- Buten, Isobuten, 2-Ethylbuten, 1-Penten, 2-Methylpenten, 3-Methylpenten, 4-Methylpenten, 1-Hexen, 1-Octen sowie $\alpha$-$C_{8-10}$-Olefin; $C_4$-$C_{12}$-Cycloolefine wie Cyclobuten, Cyclopenten, Cyclohexen oder Cycloocten; Diene wie Butadien Isopren, 1,3-Pentadien, 1,3-Hexadien, 1,3-Octadien. Bevorzugte Monomere C4 sind vinylaromatische Verbindungen, insbesondere Styrol und $C_2$-$C_{12}$-Olefine, insbesondere $C_2$-$C_6$-Olefine und besonders bevorzugt 1-Buten, Isobuten und 1-Penten.

Darüberhinaus umfassen die Monomere C auch solche Monomere C5, die in wässriger Lösung ionisierbar sind oder eine ionische Gruppe aufweisen. Hierunter fallen ethylenisch ungesättigte Sulfonsäuren, z. B. Vinylsulfonsäure, Allylsulfonsäure, Methallylsulfonsäure, Styrolsulfonsäure, Allyloxybenzolsulfonsäure, 2-Acrylamido-2-methylpropansulfonsäure, Sulfoethylmethacrylat, 2-Hydroxy-3-(2-propenyloxy)propansulfonsäure, Acrylsäure-3-sulfopropylester, Sulfoethoxypolyethylenglykol(meth)acrylat (Ethoxylierungsgrad 2 bis 100), Sulfoethoxypolypropylenglykolmethacrylat sowie deren Salze, z. B. deren Alkalimetall oder Ammoniumsalze; ethylenisch ungesättigte Phosphonsäuren wie Allylphosphonsäure, Isopropenylphosphonsäure, Vinylphosphonsäure sowie deren Salze, z. B. deren Alkalimetall oder Ammoniumsalze; sowie ethylenisch ungesättigte Amine oder ethylenisch ungesättigte quaternisierte Ammoniumverbindungen wie z. B. 2-(N,N-Dimethylamino)ethyl(meth)acrylat, 3-(N,N-Dimethylamino)propyl(meth)acrylat, 2-(N,N,N-Trimethylammonium)ethyl(meth)acrylat, 3-(N,N,N-Trimethylammonium)propyl(meth)acrylat-Chlorid, und N, N-Diallyl-N,N-dimethylammoniumchlorid. Vorzugsweise werden als Monomere C die Monomere C5, insbesondere die ethylenisch ungesättigten Sulfonsäuren und Phosphonsäuren oder deren Salze verwendet.

Als weitere Monomere C kommen auch ethylenisch ungesättigte Siloxanverbindungen in Frage, bespielsweise Vinylsilane oder (Meth)acryloxyalkylsilane, wie sie beispielsweise in der EP-A 327 oo6, der EP-A 327 376 oder der EP-A 612 771 beschrieben sind, sowie Polydimethylsiloxan-bis-(propylmaleinhalbamid) oder Polydimethylsiloxan-bis-(propylenaminomaleinhalbamid)

In einer anderen bevorzugten Ausführungsform der vorliegenden Erfindung sind die Monomere B ausgewählt unter Verbindungen der allgemeinen Formel IV

$$R^2HC=CR^1-Y[O(Alk-O)_n-R]_k \qquad (IV)$$

worin $R^1$, $R^2$ unabhängig voneinander für Wasserstoff oder $C_1$-$C_4$-Alkyl stehen und Y, Alk, R, k die zuvor genannten Bedeutungen besitzen und n > 12 ist (Ausführungsform 2). Bevorzugte Verbindungen B sind in diesem Fall die Vinyl- und Allylether der allgemeinen Formel V bzw. Va

$$R^2HC=CR^1-O(Alk-O)_n-R \qquad (V)$$

$$R^2HC=CR^1-CH_2-O(Alk-O)_n-R \qquad (Va)$$

worin $R^1$, $R^2$, Alk, n und R die zuvor genannten Bedeutungen besitzen. Insbesondere steht R für Wasserstoff oder eine $C_1$-$C_4$-Alkylgruppe.

Beispiele für geeignete Monomere umfassen: Polyethylenglykolmono(meth)allylether, Polypropylenglykolmono(meth)allylether, Polyethylenglykolpolypropylenglykolmono(meth)allylether, Polyethylenglykolpolybutylenglykolmono(meth)allylether, Polypropylenglykolpolybutylenglykolmono(meth)allylether, Methoxypolyethylenglykolmono (meth)allylether, Methoxypolypropylenglykolmono(meth)allylether, Methoxypolybutylenglykolmono(meth)allylether, Methoxypolyethylenglykol-polypropylenglykolmono(meth)allylether, Methoxypolyethylenglykolpolybutylenglykolmono (meth)allylether, Methoxypolyethylenglykol-polypropylenglykol-polybutylenglykolmono(meth)allylether, Ethoxypolyethylenglykolmono(meth)allylether, Ethoxypolypropylenglykolmono(meth)allylether, Ethoxypolybutylenglykolmono(meth)allylether, Ethoxypolyethylenglykol-polypropylenglykolmono(meth)allylether, Ethoxypolyethylenglykol-polybutylenglykolmono(meth)allylether, Ethoxypolypropylenglykol-polybutylenglykolmono(meth)allylether Ethoxypolyethylenglykol-polypropylenglykol-polybutylenglykolmono(meth)allylether, Polyethylenglykolmonovinylether, Polypropylenglykolmonovinylether, Polybutylenglykolmonovinylether, Polyethylenglykolpolypropylenglykolmonovinylether, Polyethylenglykol-polybutylenglykolmonovinylether, Polypropylenglykol-polybutylenglykolmonovinylether, Polyethylenglykol-polypropylenglykol-polybutylenglykolmonovinylether, Methoxypolyethylenglykolmonovinylether, Methoxypolypropylenglykolmonovinylether, Methoxypolybutylenglykolmonovinylether, Methoxypolyethylenglykol-polypropylenglykolmonovinylether, Methoxypolyethylenglykol-polybutylenglykolmonovinylether, Methoxypolypropylenglykol-polybutylenglykolmonovinylether, Methoxypolyethylenglykol-polypropylenglykol-polybutylenglykolmonovinylether, Ethoxypolyethylenglykolmonovinylether, Ethoxypolypropylenglykolmonovinylether, Ethoxypolybutylenglykolmonovinylether, Ethoxypolyethylenglykol-polypropylenglykolmonovinylether, Ethoxypolyethylenglykol-polybutylenglykolmonovinylether, Ethoxypolypropylenglykol-polybutylenglykolmonovinylether, Ethoxypolyethylenglykol-polypropylenglykolpolybutylenglykolmonovinylether.

Die Monomere B werden auch in dieser Ausführungsform in Mengen von 5 bis 98 Gew.%, vorzugsweise 50 bis 97 Gew.% und insbesondere 60 bis 90 Gew.% polymerisiert. Für die Art und Menge der Phosphor enthaltenden Verbindungen gilt das obengesagte.

Als Monomere A, die in Mengen von 2 bis 95 Gew.%, vorzugsweise 3 bis 50 Gew.% und insbesondere 10 bis 40 Gew.%, bezogen auf die zu polymerisierenden Monomere einpolymerisiert werden, können die Monomere A der Ausführungsform 1 verwendet werden. Besonders bevorzugte Monomere dieser Ausführungsform umfassen Maleinsäure, Fumarsäure und/oder Maleinsäureanhydrid.

Ganz besonders bevorzugt Polymerisate der Ausführungsform 2 sind Copolymerisate aus 2 bis 30 Gew.-%, bezogen auf die zu polymerisierenden Monomere, Maleinsäure bzw. Maleinsäureanhydrid und 70 bis 98 Gew.-% Polyglykolallylether und/oder Polyglykolvinylether (mittlerer Ethoxylierungsgrad jeweils 15 bis 60).

Auch in dieser Ausführungsform können die zuvor genannten Monomere C in Mengen bis zu 50 Gew.-%, vorzugsweise bis zu 30 Gew.-% und insbesondere bis zu 20 Gew.-%, bezogen auf die zu polymerisierenden Monomere, einpolymerisiert enthalten.

In einer weiteren bevorzugten Ausführungsform der vorliegenden Erfindung werden Polymerisate verwendet, die durch radikalische Copolymerisation ethylenisch ungesättigter Monomere, die reaktive, funktionelle Gruppen aufweisen, gegebenenfalls zusammen mit den Monomeren A und/oder B und gegebenenfalls weiteren Monomeren C, in Gegenwart von 0,1 bis 50 Gew.-%, vorzugsweise 0,5 bis 25 Gew.-%, insbesondere 1 bis 20 Gew.-%, besonders bevorzugt 2 bis 15 Gew.-% und ganz besonders bevorzugt 5 bis 10 Gew.-%, bezogen auf die zu polymerisierenden Monomere, der obengenannten Phosphor 5 enthaltenden Verbindungen und nachträgliche Umwandlung wenigstens eines Teils der reaktiven funktionellen Gruppen in Seitenketten der allgemeinen Formel I und/oder Carboxylgruppen erhältlich sind (Ausführungsform 3).

Bevorzugte reaktive Gruppen umfassen cyclische Anhydridgruppen und Oxirangruppen. Die Monomere mit reaktiven, funktionellen Gruppen sind vorzugsweise ausgewählt unter ethylenisch ungesättigten Dicarbonsäureanhydriden, z.B. Maleinsäureanhydrid, Citraconsäureanhydrid, Itaconsäureanhydrid, 1,2,3,6-Tetrahydrophthalsäureanhydrid, Vinyl- und Allylglycidylether sowie den Glycidylethern der zuvor genannten ethylenisch ungesättigten $C_3$-$C_6$-Monocarbonsäuren. Besonders bevorzugt sind die obengenannten Anhydride, insbesondere Maleinsäureanhydrid.

Die Umwandlung der primär erhältlichen Polymerisate mit reaktiven funktionellen Gruppen erfolgt in der Regel durch Umsetzung der reaktiven, funktionellen Gruppen mit Alkoholen der allgemeinen Formel II oder Aminen der allgemeinen Formel III oder IIIa im Sinne einer polymeranalogen Reaktion. Die hierfür erforderlichen Reaktionsbedingungen sind dem Fachmann im Prinzip bekannt (zur Alkoholyse von Anhydriden siehe z.B. J. March, 3rd Edition, John Whiley & Sons, New York, 1985, S. 347 und dort zitierte Literatur; zur Aminolyse von Anhydriden s. ebenda, S. 371 und dort zitierte Literatur; zur Alkoholyse von Epoxiden s. ebenda S. 346 und dort zitierte Literatur; zur Aminierung von Epoxiden s. ebenda S. 368 und dort zitierte Literatur). Die polymeranaloge Umsetzung der bevorzugt einpolymerisierten Anhydrideinheiten kann auf die in der DE-A 4304 109, DE-A 195 13126 oder der EP-A 610 699 beschriebenen Weise erfolgen. Auf die genannten Schriften wird hiermit in vollem Umfang Bezug genommen.

Für die polymeranaloge Umwandlung geeignete Alkohole der allgemeinen Formel II umfassen Alkylpolyalkylenglykolen, wie z.B. Methylpolyethylenglykol mit einem mittleren Ethoxilierungsgrad von 45; Alkylpolyethylenglykol-block-polypropylenglykole, wie z.B. Methylpolyethylenglykol-block-Polypropylenglykol mit 40 Ethylenoxid-Einheiten und 5 Propylenoxid-Einheiten; Alkylpolyethylenglykol-random-polypropylenglykol, wie Methylpolyethylenglykol-random-polypropylenglykol mit statistischer Verteilung von 30 Ethylenoxid-Einheiten und 10 Propylenoxid-Einheiten; Butylpolypropylenglykol mit einem mittleren Propoxilierungsgrad von 20.

Für die polymeranaloge Umwandlung geeignete Polyalkylenglykolamine der allgemeinen Formel III oder IIIa sind beispielsweise Methylpolyethylenglykolamin mit einem mittleren Ethoxilierungsgrad von 8 oder Methylpolyethylenglykol-block-polypropylenglykolamin mit einem mittleren Ethoxilierungsgrad von 25 und einem mittleren Propoxylierungsgrad von 5.

Vorzugsweise werden die Monomere mit den reaktiven, funktionellen Gruppen in Mengen von 2 bis 95 Gew.%, insbesondere 30 bis 90 Gew.% und besonders bevorzugt 50 bis 90 Gew.%, bezogen auf die gesamte zu polymerisierende Monomermenge verwendet.

Eine bevorzugte Variante der Ausführungsform 3 ist die Verwendung von Polymerisaten, die aus den zuvor genannten Monomeren C4, im folgenden auch als Monomere D bezeichnet, sowie den Monomeren E', die sich von Halbestern ethylenisch ungesättigter Anhydride (Monomere E) ableiten, aufgebaut sind. Derartige Polymerisate können darüber hinaus noch weitere Monomere C1, C2, C3 und/oder C5, wie oben angegeben, in einpolymerisierter Form

enthalten.

Derartige Polymerisate sind prinzipiell auf zwei unterschiedlichen Wegen zugänglich. So kann man einerseits die Halbester der ethylenisch ungesättigten Dicarbonsäuren (Monomere E') per se zusammen mit den Monomeren D in Gegenwart der Phosphor enthaltenden Verbindungen polymerisieren. Bevorzugt sind Polymerisate, die durch radikalische Polymerisation der obengenannten Anhydride ethylenisch ungesättigter Dicarbonsäuren (Monomere E) gemeinsam mit den genannten Monomeren D, die vorzugsweise ausgewählt sind unter vinylaromatischen Verbindungen, insbesondere Styrol und $C_2$-$C_{12}$-Olefinen, insbesondere $C_2$-$C_6$-Olefinen und besonders bevorzugt 1-Buten, Isobuten und 1-Penten, in Gegenwart von 0,1 bis 50 Gew.-%, vorzugsweise 0,5 bis 25 Gew.-%, insbesondere 1 bis 20 Gew.-%, besonders bevorzugt 2 bis 15 Gew.-% und ganz besonders bevorzugt 5 bis 10 Gew.-%, bezogen auf die zu polymerisierenden Monomere, der Phosphor enthaltenden Verbindungen und Umwandlung der einpolymerisierten Anhydrideinheiten in Carboxylatgruppen und die erfindungsgemäßen Seitenketten der allgemeinen Formel I durch Umsetzung mit Alkoholen der allgemeinen Formel II erhältlich sind.

Die Umwandlung der Anhydrideinheiten kann sowohl während der Polymerisationsreaktion als auch nach der Polymerisationsreaktion erfolgen. Auch ist es möglich, den Halbester durch Umsetzung des ethylenisch ungesättigten Anhydrids mit dem Alkohol der allgemeinen Formel II in einer der Polymerisation vorgelagerten Reaktion in situ zu erzeugen und diese Reaktionsmischung mit den Monomeren D in Gegenwart der Phosphor enthaltenden Verbindungen zu polymerisieren.

Eine besonders bevorzugte Variante dieser Ausführungsform 3 umfaßt folgende Schritte:

1. Umsetzung des ethylenisch ungesättigten Dicarbonsäureanhydrids (Monomer E) mit einem Alkohol der allgemeinen Formel II, gegebenenfalls in Gegenwart eines Veresterungskatalysators, beispielsweise einer organischen Sulfonsäure,
2. Polymerisation dieser Reaktionsmischung gemeinsam mit Monomeren D sowie gegebenenfalls weiteren Monomeren E und/oder weiterem Alkohol der allgemeinen Formel II in Gegenwart der Phosphor enthaltenden Verbindungen und radikalischer Polymerisationsinitiatoren,
3. gegebenenfalls Vervollständigung der polymeranalogen Umwandlung der Anhydrideinheiten durch Anhebung der Reaktionstemperatur und/oder durch Zugabe weiteren Alkohols der allgemeinen Formel II.

Bevorzugte Polymerisate dieser Ausführungsform sind die durch polymeranaloge Umsetzung von Copolymerisaten aus 55 bis 80 Gew.-% Maleinsäureanhydrid und 20 bis 45 Gew.-% 1-Buten, Isobuten oder 1-Penten, oder von Copolymerisaten aus 30 bis 60 Gew.-% Maleinsäureanhydrid und 40 bis 70 Gew.-% Styrol mit Alkoholen der allgemeinen Formel II erhältlich sind.

Polymerisate, die durch radikalische Polymerisation der Monomere D und der Monomere E sowie gegebenenfalls weiterer Monomere C in Gegenwart von 0,1 bis 50 Gew.-% Phosphor enthaltender Verbindungen erhältlich sind, sind neu und als Ausgangspolymerisate für die erfindungsgemäßen Polymerisate mit Seitenketten der allgemeinen Formel I und Carboxylgruppen ebenfalls Gegenstand der vorliegenden Erfindung.

Bevorzugte Polymerisate dieser Klasse sind durch Polymerisation von 5 bis 98 Gew.%, insbesondere 10 bis 70 Gew.% und besonders bevorzugt 10 bis 50 Gew.%, bezogen auf die zu polymerisierenden Monomere, Monomeren D mit 2 bis 95 Gew.%, insbesondere 30 bis 90 Gew.%, und besonders bevorzugt 50 bis 90 Gew.% Monomeren E sowie gegebenenfalls bis 50 Gew.%, vorzugsweise bis 30 Gew.% und besonders bevorzugt bis 20 Gew.% Monomeren C1, C2, C3 und/oder C5 erhältlich.

Überraschenderweise hat sich nun gezeigt, daß derartige Polymerisate ebenfalls als Additive für mineralische Baustoffe geeignet sind, insbesondere dann, wenn die Monomere D ausgewählt sind unter den obengenannten Olefinen und/oder den Cycloolefinen. Die Verwendung derartiger Polymerisate ist demnach ebenfalls Gegenstand der vorliegenden Erfindung. Besonders geeignet sind Polymerisate, worin Monomer E Maleinsäureanhydrid ist. Ebenfalls vorteilhaft auf die anwendungstechnischen Eigenschaften wirkt sich aus, wenn Monomer D ausgewählt ist unter 1-Buten, Isobuten und 1-Penten. Ganz besonder bevorzugt sind Polymerisate aus 20 bis 45 Gew.% 1-Buten, Isobuten und/oder 1-Penten und 55 bis 80 Gew.% Maleinsäureanhydrid. Derartige Copolymerisate weisen vorzugsweise ein gewichtsmittleres Molekulargewicht $M_w$ im Bereich von 1.500 bis 35.000 auf.

Alle genannten Polymerklassen der Ausführungsformen 1 bis 3 können darüber hinaus noch einpolymerisierte Struktureinheiten enthalten, die sich von Maleinimid ableiten, welches gegebenenfalls am Stickstoff mit $C_1$-$C_{20}$-Alkyl, $C_6$-$C_{20}$-Aryl oder $C_7$-$C_{20}$-Aralkyl substituiert ist. Geeignete Maleinimideinheiten sind beispielsweise in der DE-A 43 04 109, der DE-A 195 13 126 und der EP-A 610 699 beschrieben, auf die hiermit in vollem Umfang Bezug genommen wird. Derartige Polymerisate sind im Prinzip auf zwei unterschiedlichen Wegen erhältlich: so können beispielsweise die vorgenannten Monomere mit geeigneten Derivaten des Maleinimids radikalisch copolymerisiert werden, wobei die Copolymerisation in Gegenwart von Phosphor enthaltenden Verbindungen durchgeführt wird. Alternativ können Polymerisate verwendet werden, die erhältlich sind durch

1. Copolymerisation von Maleinsäureanhydrid mit Monomeren, ausgewählt insbesondere aus den Monomeren der Gruppe A, der Gruppe B und/oder der Gruppe D, in Gegenwart Phosphor enthaltender Verbindungen,
2. und nachfolgende polymeranaloge Umsetzung der einpolymerisierten Maleinsäureanhydriden mit Ammoniak, primären $C_1$-$C_{20}$-Alkylaminen, $C_6$-$C_{20}$-Arylaminen oder $C_7$-$C_{20}$-Aralkylaminen.

Die Herstellung der erfindungsgemäß zur Anwendung kommenden Polymerisate erfolgt, wie bereits oben erwähnt, durch radikalische Polymerisationsreaktion ethylenisch ungesättigter Monomere A, die Carboxylgruppen enthalten, und ethylenisch ungesättigter Monomere B, die Seitenketten der allgemeinen Formel I aufweisen, sowie gegebenenfalls weiterer Monomere C in Gegenwart von 0.1 bis 50 Gew.%, vorzugsweise 0,5 bis 25 Gew.-%, insbesondere 1 bis 20 Gew.-%, besonders bevorzugt 2 bis 15 Gew.-% und ganz besonders bevorzugt 5 bis 10 Gew.-%, bezogen auf die zu polymerisierenden Monomere, Phosphor enthaltenden Verbindungen (Methode 1)
oder durch radikalische Copolymerisation ethylenisch ungesättigter Monomere, die reaktive funktionelle Gruppen aufweisen, gegebenenfalls zusammen mit Monomeren A und/oder B und gegebenenfalls weiteren Monomeren C, in Gegenwart von 0.1 bis 50 Gew.%, vorzugsweise 0,5 bis 25 Gew.-%, insbesondere 1 bis 20 Gew.-%, besonders bevorzugt 2 bis 15 Gew.-% und ganz besonders bevorzugt 5 bis 10 Gew.-%, bezogen auf die zu polymerisierenden Monomere, Phosphor enthaltenden Verbindungen und nachträgliche Umwandlung wenigstens eines Teils der reaktiven funktionellen Gruppen in Seitenketten der allgemeinen Formel I und/oder Carboxylgruppen (Methode 2).

Die Phosphor enthaltende Verbindung kann sowohl im Reaktionsgefäß vorgelegt, als auch kontinuierlich oder portionsweise dem Reaktionsansatz zugeführt werden. Vorzugsweise wird die Hauptmenge und insbesondere wenigstens 90 % der Phospor enthaltenden Verbindung während der Polymerisationsreaktion zugegeben.

Die zu polymerisierenden Monomere können im Reaktionsgefäß vorgelegt oder dem Reaktionsansatz portionsweise oder vorzugweise kontinuierlich zugeführt werden. Vorzugsweise wird die Hauptmenge und insbesondere wenigstens 90 Gew.-% der zu polymerisierenden Monomere kontinuierlich zum Reaktionsansatz gegeben.

Dabei kann die Polymerisation als Substanzpolymerisation, Lösungspolymerisation und bei schlechter Löslichkeit der Monomere auch als Emulsions-, Dispersions- oder Suspensionspolymerisation durchgeführt werden. Ebenfalls ist es möglich, bei hinreichend schlechter Löslichkeit des Polymersiats im Reaktionsgemisch die Polymerisation als Fällungspolymerisation durchzuführen.

Werden die Polymerisate nach der Methode 1 hergestellt, dann werden die Polymerisate bevorzugt durch eine Lösungs- oder Fällungspolymerisation in Wasser oder in einer Mischung aus Wasser und bis zu 60 Gew.-%, bezogen auf die Mischung aus einem OH-Gruppen enthaltenden Lösungsmittel durchgeführt, das ausgewählt ist unter $C_1$-$C_4$-Alkanolen, $C_2$-$C_{10}$-Alkylenglykolen, worin die Alkylenkette durch eine oder mehrere, nicht benachbarte Sauerstoffatome unterbrochen sein kann, und Halbethern der $C_2$-$C_{10}$-Alkylenglykole mit $C_1$-$C_4$-Alkanolen. Beispiele für geeignete OH-Gruppen enthaltende Lösungsmittel sind Methanol, Ethanol, Isopropanol, n-Butanol, Ethylenglykol, Diethylenglykol, Methyldiglykol, Dipropylenglykol, Butylglykol, Butyldiglykol, Triethylenglykol, die Methylether der genannten Glykole sowie Oligomere aus Ethylenoxyd mit 4 bis 6 Ethylenoxydeinheiten, Oligomere aus Propylenoxyd mit 3 bis 6 Propylenoxydeinheiten sowie Polyethylenglykol-polypropylenglykolcooligomere. Darüber hinaus kann das wässrige Reaktionsmedium auch andere, mit Wasser mischbare Lösungsmittel wie Aceton, Methylethylketon, Tetrahydrofuran, Dioxan, N-Methylpyrrolidon, Dimethylformamid etc. enthalten.

Werden die Polymerisate gemäß Methode 2 hergestellt, erfolgt die Polymerisation vorzugsweise als Lösungs- oder Fällungspolymerisation in einem inerten Lösungsmittel. Geeignete Lösungsmittel umfassen cyclische Ether wie Tetrahydrofuran oder Dioxan, Ketone wie Aceton, Methylethylceton, Cyclohexanon, Ester aliphatischer Carbonsäuren mit $C_1$-$C_4$-Alkanolen wie Essigsäureethylester oder Essigsäure-n-butylester, aromatische Kohlenwasserstoffe wie Toluol, Xylole, Cumol, Chlorbenzol, Ethylbenzol, technische Mischungen von Alkylaromaten, Cyclohexan und technische Aliphatenmischungen.

Die Polymerisation kann auch als Emulsions- oder Suspensionspolymerisation durchgeführt werden, wenn die Monomere im Reaktionsmedium schlecht löslich sind. Derartige Polymerisationsverfahren sind dem Fachmann bekannt und können für die Herstellung der erfindungsgemäßen Polymerisate in der dafür üblichen Weise durchgeführt werden. Erfolgt die Herstellung der erfindungsgemäßen Polymerisate durch radikalische, wässrige Emulsionspolymerisation, empfiehlt es sich, dem Reaktionsmedium Tenside oder Schutzkolloide zuzusetzen. Eine Zusammenstellung geeigneter Emulgatoren und Schutzkolloide findet sich beispielsweise in Houben Weyl, Methoden der organischen Chemie, Band XIV/1 Makromolekulare Stoffe, Georg Thieme Verlag, Stuttgart 1961, S. 411 ff.

Die für die radikalische Polymerisation verwendeten Polymerisationsinitiatoren sind vorzugsweise im Reaktionsmedium löslich. Sie werden in Mengen von bis zu 30 Gew.%, vorzugsweise 0,05 bis 15 Gew.%, besonders bevorzugt 0,2 bis 8 Gew.-%, bezogen auf die bei der Polymerisation eingesetzten Monomere verwendet.

Erfolgt die Polymerisation in einem wasserhaltigen Lösungsmittel, so werden demnach vorzugsweise wasserlösliche Polymerisationsinitiatoren wie beispielsweise Natriumpersulfat, Kaliumpersulfat, Ammoniumpersulfat, Wasserstoffperoxid, tert.-Butylhydroperoxid, 2,2'-Azobis(2-amidinopropan)dihydrochlorid, 2,2'-Azo-bis-(N,N'-dimethylenisobutyramidin)dihydrochlorid und 2,2'-Azo-bis-(4-cyanopentansäure) verwendet. Die Initiatoren werden entweder

allein oder in Mischung verwendet, z.B. Mischungen aus Wasserstoffperoxid und Natriumpersulfat.

Auch die bekannten Redox-Initiatorsysteme können als Polymerisationsinitiatoren verwendet werden. Solche Redox-Initiatorsysteme enthalten mindestens eine peroxidhaltige Verbindung in Kombination mit einem Redox-Coinitiator z.B. reduzierend wirkenden Schwefelverbindungen, beispielsweise Bisulfite, Sulfite, Thiosulfate, Dithionite und Tetrathionate von Alkalimetallen und Ammoniumverbindungen, Natriumhydroxymethansulfinat-Dihydrat und Thioharnstoff. So kann man Kombinationen von Peroxodisulfaten mit Alkalimetall- oder Ammoniumhydrogensulfiten einsetzen, z.B. Ammoniumperoxidisulfat und Ammoniumdisulfit. Die Gewichtsverhältnis von peroxidhaltigen Verbindungen zu den Redox-Coinitiatoren beträgt vorzugsweise 30:1 bis 0,05:1.

In Kombination mit den Initiatoren bzw. den Redoxinitiatorsystemen können zusätzlich Übergangsmetallkatalysatoren eingesetzt werden, wie z.B. Eisen-, Nickel-, Kobalt-, Mangan-, Kupfer-, Vanadium-, oder Chromsalze, wie Eisen-II-sulfat, Kobalt-II-chlorid, Nickel-II-sulfat, Kupfer-I-chlorid, Mangan-II-acetat, Vanadin-III-acetat, Mangan-II-chlorid eingesetzt werden. Bezogen auf die Monomere werden diese Übergangsmetallsalze üblicherweise in Mengen von 0.1 ppm bis 1000 ppm eingesetzt. So kann man Kombinationen von Wasserstoffperoxid mit Eisen-II-salzen einsetzen, wie beispielsweise 0,5 bis 30 % Wasserstoffperoxid und 0,1 bis 500 ppm Mohrsches Salz.

Für die Polymerisation im nichtwäßrigen Milieu werden bevorzugt Initiatoren wie Dibenzoylperoxid, Dicyclohexylperoxidicarbonat, Dilaurylperoxid, Methylethylketonperoxid, Acetylacetonperoxid, tert.-Butylhydroperoxid, Cumolhydroperoxid, tert.-Butylperneodecanoat, tert.-Amylperpivalat, tert.-Butylperpivalat, tert.-Butylperneohexanoat, tert.-Butylper-2-ethylhexanoat, tert.-Butylperbenzoat, Azodiisobutyronitril, 2,2'-Azobis(N,N'-dimethylenisobutyramidin)-dihydrochlorid, 2,2'-Azo-bis-(isobutyronitril), 4,4'-Azobis(4-cyanovaleriansäure) eingesetzt. In Kombination mit diesen Initiatoren können Reduktionsmittel wie Benzoin, Dimethylanilin, Ascorbinsäure sowie gegebenenfalls im Reaktionsmedium lösliche Komplexe und Salze von Übergangsmetallen verwendet werden.

Falls die Reaktionsmischung an der unteren Grenze des für die Polymerisation in Betracht kommenden Temperaturbereiches anpolymerisiert und anschließend bei einer höheren Temperatur auspolymerisiert wird, ist es zweckmäßig, mindestens zwei verschiedene Initiatoren zu verwenden, die bei unterschiedlichen Temperaturen zerfallen, so daß in jedem Temperaturintervall eine ausreichende Konzentration an Radikalen zur Verfügung steht.

Die Polymerisationsreaktion erfolgt vorzugsweise bei Temperaturen im Bereich von 30 bis 300°C, vorzugsweise im Bereich von 50 bis 160°C und ganz besonders bevorzugt im Bereich von 80 bis 150°C. Dabei wird bevorzugt unter Ausschluß von Sauerstoff gearbeitet, vorzugsweise in einem Stickstoffstrom. In der Regel wird die Polymerisation bei Normaldruck durchgeführt, jedoch ist auch die Anwendung von niedrigeren Drücken oder höheren Drücken möglich, insbesondere wenn Polymerisationstemperaturen angewendet werden, die oberhalb des Siedepunktes der Monomere und/oder des Lösungsmittels liegen.

Die sich bei Methode 2 der Polymerisation anschließende polymeranaloge Umwandlung der reaktiven Gruppen in Seitenketten der allgemeinen Formel I und/oder Carboxylgruppen, erfolgt in an sich bekannter Weise auf die bei der Ausführungsform 3 beschriebenen Weise.

Zur Einstellung des gewünschten Molekulargewichts der Polymerisate kann es erforderlich sein, in Gegenwart eines Molekulargewichtsreglers, d. h. einer üblichen kettenabbrechenden Substanz, zu polymerisieren. Geeignete Molekulargewichtsregler umfassen beispielsweise Formaldehyd, Acetaldehyd, Propionaldehyd, n-Butyraldehyd, Isobutyraldehyd, Ameisensäure, Ammoniumformiat, Hydroxylamin sowie dessen Sulfat, Chlorid oder Phosphat; SH-Gruppen enthaltende Verbindungen wie Thioglykolsäure, Mercaptopropionsäure, Mercaptoethanol, Mercaptopropanol, Mercaptobutanole, Mercaptohexanol, Thiomaleinsäure, Thiophenol, 4-tert.-Butylthiophenol, n-Dodecylmercaptan, tert.-Dodecylmercaptan. Weitere Beispiele für Polymerisationsregler sind Allylalkohol, Butenol, Isopropanol, n-Butanol, Isobutanol, Glykol, Glycerin, Pentaerythrit.

Die Polymerisationeregler werden, sofern ihr Einsatz erforderlich ist, in Mengen bis zu 20 Gew.-%, bezogen auf die Monomeren, eingesetzt. Vorzugsweise polymerisiert man in Gegenwart von 0,5 bis 15 Gew.-% eines SH-Gruppen enthaltenden Polymerisationsreglers, bezogen auf die Monomeren.

Weiterhin kann es für den gewünschten Anwendungszweck sinnvoll sein, vernetzte Polymerisate zu verwenden. Vernetzte Polymerisate sind entweder durch Copolymerisation der genannten Monomere mit zwei- oder mehrfach ethylenisch ungesättigten Verbindungen oder durch nachträgliche Vernetzung der von Carboxyl-, Anhydrid- oder Hydroxylgruppen im Polymerisat mit geeigneten polyfunktionellen Verbindungen erhältlich. Erfolgt die Vernetzung auf dem Wege der Copolymerisation mit mehrfach ethylenisch ungesättigten Verbindungen, dann werden diese üblicherweise in Anteilen von 0,01 bis 20 Gew.-% und vorzugsweise in Mengen von 0,1 bis 5 Gew.-%, bezogen auf die zu polymerisierenden Monomere, eingesetzt. Bei nachträglicher Vernetzung der funktionellen Gruppen im Polymerisat mit polyfunktionellen reaktiven Verbindungen werden diese üblicherweise in Mengen von 0,2 Gew.-% bis 20 Gew.-% und insbesondere 0,5 bis 10 Gew.-%, bezogen auf das Polymerisat, verwendet.

Geeignete zwei- oder mehrfach ethylenisch ungesättigte Verbindungen umfassen: Diacrylate oder Dimethacrylate von mindestens zweiwertigen gesättigten Alkoholen, wie z.B.Ethylenglykoldiacrylat, Ethylenglykoldimethylacrylat, 1,2-Propylenglykoldiacrylat, 1,2-Propylenglykoldimethacrylat, Butandiol-1,4-diacrylat, Butandiol-1,4-dimethacrylat, Hexandioldiacrylat, Hexandioldimethacrylat, Neopentylglykoldiacrylat, Neopentylglykoldimethacrylat, 3-Methylpentandioldiacrylat, 3-Methylpentandioldimethacrylat; Acrylsäure- und Methacrylsäureester von Alkoholen mit mehr als 2 OH-Gruppen, wie z.B. Trimethylolpropantriacrylat, Trimethylolpropantrimethacrylat, Glycerintri(meth)acrylat; Diacrylate oder Dimethacrylate von Polyethylenglykolen oder Polypropylenglykolen mit Molekulargewichten von jeweils 200 bis 9000, wie z.B. Diethylenglykyoldiacrylat, Diethylenglykoldimethacrylat, Triethylenglykoldiacrylat, Triethylenglykoldimethacrylat, Tetraethylenglykoldiacrylat, Tetraethylenglykoldimethacrylat, Polyethylenglykol(meth) acrylat, Dipropylenglykoldiacrylat, Tripropylenglykoldiacrylat, Polypropylenglykol(meth)acrylat; Vinylester von ethylenisch ungesättigten C3- bis C6-Carbonsäuren, z.B. Vinylacrylat, Vinylmethacrylat, Vinylitaconat; Vinylester von mindestens 2 Carboxylgruppen enthaltenden gesättigten Carbonsäuren sowie Di- und Polyvinylether von mindestens zweiwertigen Alkoholen, wie z.B. Adipinsäuredivinylester, Butandioldivinylether, Trimethylolpropantrivinylether; Allylester ethylenisch ungesättigter Carbonsäuren, wie z.B. Allylacrylat, Allylmethacrylat; Allylether von mehrwertigen Alkohlen, wie z.B. Pentaerithrittriallylether, Triallylsaccharose, Pentaallylsaccharose, Pentaallylsucrose; Methylenbis (meth)acrylamid, Divinylethylenharnstoff, Divinylpropylenharnstoff, Divinylbenzol, Divinyldioxan, Triallylcyanurat, Tetraallylsilan und Tetravinylsilan. Bis- oder Polyacrylsiloxane, Diallylphthalat, Allylvinylether, Diallylfumarat.

Als polyfunktionelle, reaktive Verbindungen, die für die nachträgliche Vernetzung verwendet werden können sind insbesondere Glycidylether von Polyhydroxyverbindungen oder die Glycidylester von Di- oder Polycarbonsäuren geeignet. Beispiele für geeignete vernetzende Verbindungen umfassen: Ethylenglykoldiglycidylether, Polyethylenglykoldiglycidylether, Glycerinpolyglycidylether, Diglycerinpolyglycidylether, Polyglycerinpolyglycidylether, Sorbitolpolyglycidylether, Pentaerythritolpolyglycidylether, Propylenglykoldiglycidylether, Polypropylenglykoldiglycidylether, Resorcindiglycidylether, o-Phthalsäurediglycidylester, Adipinsäurediglycidylester.

Für die anwendungstechnischen Eigenschaften der Polymerisate kann es weiterhin von Vorteil sein, wenn ein Teil der im Polymer vorhandenen Carboxylgruppen oder gegebenenfalls vorliegende reaktive funktionelle Gruppen nachträglich in einer polymeranalogen Reaktion noch modifiziert werden. Derartige Modifizierungen sind dem Fachmann im Prinzip bekannt. Im Falle der Umwandlung der obengenannten reaktiven Gruppen kann die Modifizierung auf die bei Ausführungsform 3 beschriebenen Methoden erfolgen.

Die polymeranaloge Umsetzung erfolgt vorzugsweise mit hydroxyl- oder aminogruppenhaltigen Verbindungen, wie z.B. gesättigten oder ungesättigten aliphatischen Alkoholen, wie beispielsweise Methanol, Ethanol, n-Propanol, Isopropanol, n-Butanol, Isobutanol, n-Pentanol, n-Hexanol, n-Oktanol, 2-Ethylhexanol, Nonanol, Decanol, Tridecanol, Cyclohexanol, Talgfettalkohol, Stearylalkohol, sowie C9/11-Oxoalkohole und C13/15-Oxoalkohole; oder primären oder sekundären Aminen wie Methylamin, Ethylamin, n-Propylamin, Isopropylamin, n-Butylamin, Isobutylamin, Hexylamin, Cyclohexylamin, Methylcyclohexylamin, 2-Ethylhexylamin, n-Oktylamin, Isotridecylamin, Talgfettamin, Stearylamin, Oleylamin, Taurin, Dimethylamin, Diethylamin, Di-n-Propylamin, Diisopropylamin, Di-n-Butylamin, Diisobutylamin, Dihexylamin, Dicyclohexylamin, Di-Methylcyclohexylamin, Di-2-Ethylhexylamin, Di-n-Oktylamin, Di-Isotridecylamin, Di-Talgfettamin, Di-Stearylamin, Di-Oleylamin, Ethanolamin, Di-Ethanolamin, n-Propanolamin, Di-n-propanolamin, Morpholin und Bis-(polydimethylsiloxan-1-prop-3-yl)-amin.

Die erfindungsgemäßen Polymere mit Carboxylgruppen und Seitenketten der allgemeinen Formel I eignen sich hervorragend als Zusatzmittel für Zementmischungen wie Beton oder Mörtel. Unter Zement ist beispielsweise Portlandzement, Tonerdezement ode vermischter Zement, wie beispielsweise Puzzolanzement, Schlackenzement oder andere Typen zu verstehen. Portlandzement wird bevorzugt. Die Copolymere werden in einer Menge von 0,01 bis 10 Gew.-%, vorzugsweise 0,05 bis 3 Gew.-%, bezogen auf das Gewicht des Zementes eingesetzt.

Die Polymerisate können in fester Form, die durch Trocknung, beispielsweise durch Sprühtrocknung, von Polymerlösungen oder Dispersionen, wie sie bei der Polymerisation anfallen, erhältlich ist, zu der gebrauchsfertigen Zubereitung des mineralischen Baustoffs gegeben werden. Auch ist es denkbar, die Copolymerisate mit dem mineralischen Bindemittel zu formulieren und hieraus die gebrauchsfertigen Zubereitung des mineralischen Baustoffs zu bereiten. Vorzugsweise wird das Copolymer in flüssiger, d.h. gelöster emulgierter oder suspendierter Form, beispielsweise in Form der Polymerisationslösung, bei der Zubereitung des mineralsichen Baustoffs eingesetzt.

Für die Anwendung in Beton oder Mörtel kann es vorteilhaft sein, Polymere einzusetzen, die erst in Gegenwart des alkalischen Betons oder Mörtels in eine wasserlösliche und damit wirksame Form übergehen, wie z.B. Carbonsäure- oder Carbonsäureanhydridstrukturen enthaltende Polymerisate. Die langsame Freigabe des wirksamen Polymeren hat eine länger anhaltende Wirksamkeit zur Folge.

Die erfindungsgemäßen Polymere können auch in Kombination mit den bekannten Betonverflüssigern auf Basis von Naphthalinformaldehyd-Kondensat-Sulfonat, Melaminformaldehyd-Kondensaten-Sulfonat, Phenolsulfonsäure-Formaldehydkondensat und Ligninsulfonaten eingesetzt werden. Auch können sie in Kombination mit hochmolekularen Polyethylenoxiden (Mw 100.000 - 8.000.000) verwendet werden. Weiterhin können sie zusammen mit Cellulosen, z.B. Alkyl- bzw. Hydroxyalkylcellulosen, Stärken oder Stärkederivaten eingesetzt werden. Weiterhn können Additive wie Luftporenbildner, Expansionsmittel, Hydrophobiermittel, Abbindeverzögerer, Abbindebeschleuniger, Frostschutzmittel, Dichtungsmittel, Pigmente, Korrosionsinhibitoren, Fließmittel, Einpreßhilfen, Stabilisierer, Mikrohohlkugeln zugemischt werden.

Grundsätzlich können die erfindungsgemäßen Polymerisate auch zusammen mit filmbildenden Polymerisaten verwendet werden. Hierunter sind solche Polymerisate zu verstehen deren Glasübergangstemperatur (DSC-midpoint temperature, ASTM D 3481-82), ≤ 65°C, vorzugsweise ≤ 50°C, besonders bevorzugt ≤ 25°C und ganz besonders bevorzugt ≤ 0°C ist. Anhand der von Fox (T.G. Fox, Bull. Am. Phys. Soc (Ser.II) 1, 1956, 123 aufgestellten Beziehung zwischen der Glasübergangstemperatur von Homopolymerisaten und der Glasübergangstemperatur von Copolymeren ist der Fachmann in der Lage, geeignete Polymere auszuwählen. (Glasübergangstemperaturen für Homopolymere finden sich beispielsweise in Ullmanns Encyclopedia of Industrial Chemistry, Vol. A21, VCH, Weinheim 1992, S. 169 oder in J. Brandrup, E.H. Immergut, Polymer Handbook 3rd Ed., J. Wiley, New York 1998).

Weiterhin ist es oftmals von Vorteil, wenn man die erfindungsgemäßen Polymerisate gemeinsam mit Antischaummitteln verwendet. Hierdurch wird verhindert, daß beim Zubereiten der gebrauchsfertigen mineralischen Baustoffe zuviel Luft in Form von Luftporen in den Beton eingetragen werden, welche die Festigkeit des abgebundenen mineralischen Baustoffs herabsetzen würden. Geeignete Antischaummittel umfassen insbesondere Antischaummittel auf Polyalkylenoxidbasis, wie Polyethylenoxyd-, Polypropylenoxyd-, Dialkylether wie Diethylenglykolheptylether, Polyethylenoxydoleylether, Polypropylenoxyddibutylether, Polyethylenoxyd-, Polypropylenoxyd-2-ethylhexylether. Ebenfalls geeignet sind die Ethoxilierungsprodukte und die Propoxilierungsprodukte von Alkoholen mit 10 bis 20 Kohlenstoffatomen, ethoxiliertes/propoxiliertes (Alkyl)Phenol wie propoxiliertes Phenol (Propoxilierungsgrad 2 bis 40), ethoxiliertes (Alkyl)phenol (Ethoxilierungsgrad 2 bis 50). Ebenfalls geeignet sind die Diester von Alkylenglykolen bzw. Polyalkylenglykolen wie Diethylenglykoldioleat, Ethylenglykoldistearat oder aliphatische Säureester von Alkylenoxydsorbitanen wie Polyethylenoxydsorbitan-Monolaurinsäureester, Polyethylenoxidsorbitan-Trioleat. Als Antischaummittel sind auch Phosphorsäureester wie Tributylphosphat oder Triisobutylphosphat, Phthalate wie Dibutylphthalat, Siloxane wie Polydimethylsiloxan und dessen Derivate, wie die z. B. durch Hydrosilylierung mit Allylalkoxylaten hervorgehen. Weiterhin geeignet sind anionische Antischaummittel wie die Schwefelsäurehalbester ethoxilierter (Alkyl)Phenole, z. B. Methylpolypropylenoxydsulfat-Natriumsalz und n-Dodecylphenolethoxilatsulfat-Natriumsalz, oder Phosphate ethoxilierter Fettalkohole wie Polyethylenoxydstearylphosphat. Derartige Antischaummittel werden üblicherweise in Mengen von 0,05 Gew.-% bis 10 Gew.-% und vorzugsweise von 0,5 bis 5 Gew.-%, bezogen auf die Polymerisate verwendet.

Die Antischaummittel können auf verschiedene Weise mit dem Polymer kombiniert werden. Liegt das Polymerisat beispielsweise als wäßrige Lösung vor, kann das Antischaummittel fest oder gelöst zu der Polymerlösung zugegeben werden. Ist das Antischaummittel in der wässrigen Polymerlösung nicht löslich, dann können Emulgatoren oder Schutzkolloide zu seiner Stabilisierung zugesetzt werden.

Liegt das erfindungsgemäße Polymerisat in Form eines Feststoffes, wie er z.B. aus einer Sprühtrocknung oder Sprühwirbelschichtgranulierung hervorgeht, vor, so kann das Antischaummittel als Feststoff zugemischt werden oder aber beim Sprühtrocknungsprozeß oder Sprühgranulierungsprozeß gemeinsam mit dem Polymeren konfektioniert werden.

## Beispiele

### I. Analytik

#### Ia. Bestimmung des mittleren Molekulargewichtes

Die Bestimmung des gewichtsmittleren Molekulargewichtes erfolgte durch Gel-Permeations-Chromatographie (=GPC) mit wäßrigen Elutionsmitteln. Die Kalibrierung erfolgte mit einem eng verteilten Na-Polyacrylat-Standard. Als Elutionsmittel wurde eine wäßrige Lösung von Kaliumdihydrogenphosphat und Natriumchlorid eingesetzt. Als interner Standard wurde Ethylenglykol verwendet. Die Chromatographiesäulen waren mit TSK PW-XL 3000 und TSK PW-XL 5000 (Fa. TosoHaas) als stationäre Phase beladen. Zur Detektion wurde ein Differentialrefraktometer eingesetzt.

#### Ib. Bestimmung des K-Wertes

Die K-Werte der wäßrigen Natriumsalzlösungen der Copolymerisate wurden nach H. Fikentscher, Cellulose-Chemie, Band 13, 58-64 und 71-74 (1932) in wäßriger Lösung bei einem pH-Wert von 7, einer Temperatur von 25°C und einer Polymerkonzentration des Natriumsalzes des Copolymerisates von 1 Gew.-% bestimmt.

#### Ic. Bestimmung des Feststoffgehaltes

In ein Alu-Schälchen wird eine definierte Menge der Probe (ca. 0,5 - 1 g) eingewogen (Einwaage). Die Probe wird unter einer IR-Lampe (160 Volt) für 30 Minuten getrocknet. Danach wird erneut die Masse der Probe bestimmt (Auswaage). Der prozentuale Feststoffgehalt FG errechnet sich wie folgt:

FG = Auswaage x 100 / Einwaage [Gew.%]

II. Herstellvorschriften für Copolymere 1 bis 10

Copolymer 1 (erfindungsgemäß)

In einen 2-1-Glasreaktor mit Ankerrührer, 5 automatischen Zulaufdosiereinrichtungen, Rückflußkühler und Ölbadheizung legte man 522,85 g vollentsalztes Wasser vor und erhitzte unter Inertgas zum Sieden. Zu dieser Lösung wurden gleichzeitig beginnend innerhalb 4 Stunden Zulauf 1, bestehend aus 192 g Methylpolyethylenglykolmethacrylat (mit mittlerem Ethoxilierungsgrad von 22) und 360 g vollentsalztem Wasser, Zulauf 2, bestehend aus 48 g Methacrylsäure, Zulauf 3, bestehend aus 60 g einer 20 %igen Lösung von Natriumphosphinat-Monohydrat in vollentsalztem Wasser, und Zulauf 4, bestehend aus 70,3 g einer 2,5%igen Lösung von Natriumperoxidisulfat in vollentsalztem Wasser, gleichmäßig zudosiert. Anschließend wurde die Reaktionsmischung noch 1 Stunde bei Siedetemperatur nachpolymerisiert. Danach wurde die Mischung auf 30 °C abgekühlt und mit 37 g einer 50%igen Lösung von Natriumhydroxid in vollentsalztem Wasser neutralisiert. Es wurde eine klare Lösung des Polymeren mit pH 7,0 und einem Feststoffgehalt von 20,4 Gew.% erhalten. Der K-Wert beträgt 31.9, das gewichtsmittlere Molekulargewicht beträgt 20300.

Copolymer 2 (Vergleichsbeispiel)

In einen 4-1-Glasreaktor mit Ankerrührer, 4 automatischen Zulaufdosiereinrichtungen, Rückflußkühler und Ölbadheizung wurden 1199 g vollentsalztes Wasser vorgelegt und unter Inertgas zum Sieden erhitzt. Zu dieser Lösung wurden gleichzeitig beginnend innerhalb 4 Stunden Zulauf 1, bestehend aus 403,2 g Methylpolyethylenglykolmethacrylat (mit mittlerem Ethoxilierungsgrad von 22) und 750 g vollentsalztem Wasser, Zulauf 2, bestehend aus 100,8 g Methacrylsäure, und Zulauf 3, bestehend aus 147,6 g einer 2,5%igen Lösung von Natriumperoxidisulfat in vollentsalztem Wasser, gleichmäßig zudosiert. Anschließend wurde die Reaktionsmischung noch 1 Stunde bei Siedetemperatur nachpolymerisiert. Danach wurde die Mischung auf 30°C abgekühlt und mit 78 g einer 50%igen Lösung von Natriumhydroxid in vollentsalztem Wasser neutralisiert. Es wurde eine klare Lösung des Polymeren mit pH 7,0 und einem Feststoffgehalt von 19,8 Gew.% erhalten. Das gewichtsmittlere Molekulargewicht betrug 40.000, der K-Wert 42.2.

Copolymer 3 (erfindungsgemäß)

In einen 2-1-Glasreaktor mit Ankerrührer, 5 automatischen Zulaufdosiereinrichtungen, Rückflußkühler und Ölbadheizung wurden 523 g vollentsaltzes Wasser vorgelegt und unter Inertgas zum Sieden erhitzt. Zu dieser Lösung wurden gleichzeitig beginnend innerhalb 4 Stunden Zulauf 1, bestehend aus 192 g Methylpolyethylenglykolmethacrylat (mit mittlerem Ethoxilierungsgrad von 22 ) und 360 g vollentsalztem Wasser, Zulauf 2, bestehend aus 48 g Methacrylsäure, Zulauf 3, bestehend aus 54 g einer 11,1 %igen Lösung von Natriumphosphinat-Monohydrat in vollentsalztem Wasser, und Zulauf 4, bestehend aus 70,3 g einer 2,5%igen Lösung von Natriumperoxidisulfat in vollentsalztem Wasser, gleichmäßig dosiert. Anschließend wurde die Reaktionsmischung noch 1 Stunde bei Siedetemperatur nachpolymerisiert. Danach wurde die Mischung auf 30 °C abgekühlt und mit 44,3 g einer 50%igen Lösung von Natriumhydroxid in vollentsalztem Wasser neutralisiert. Es wurde eine gelbbraune, leicht trübe Lösung des Polymeren mit pH 7,0 und einem Feststoffgehalt von 20,2 Gew.% erhalten. Der K-Wert beträgt 33.9, das gewichtsmittlere Molekulargewicht beträgt 25100.

Copolymer 4 (erfindungsgemäß)

In einen 2-1-Glasreaktor mit Ankerrührer, 5 automatischen Zulaufdosiereinrichtungen, Rückflußkühler und Ölbadheizung wurden 523 g vollentsaltzes Wasser vorgelegt und unter Inertgas zum Sieden erhitzt. Zu dieser Lösung wurden gleichzeitig beginnend innerhalb 4 Stunden Zulauf 1, bestehend aus 192 g Methylpolyethylenglykolmethacrylat (mit mittlerem Ethoxilierungsgrad von 22 ) und 360 g vollentsalztem Wasser, Zulauf 2, bestehend aus 48 g Methacrylsäure, Zulauf 3, bestehend aus 72 g einer 33,3 %igen Lösung von Natriumphosphinat-Monohydrat in vollentsalztem Wasser, und Zulauf 4, bestehend aus 70,3 g einer 2,5 %igen Lösung von Natriumperoxidisulfat in vollentsalztem Wasser, gleichmäß zudosiert. Anschließend wurde die Reaktionsmischung noch 1 Stunde bei Siedetemperatur nachpolymerisiert. Danach wurde die Mischung auf 30 °C abgekühlt und mit 41,60 g einer 50%igen Lösung von Natriumhydroxid in vollentsalztem Wasser neutralisiert. Es wurde eine gelbbraune Lösung des Polymeren mit pH 7,0 und einem Feststoffgehalt von 20,8 Gew.% erhalten. Der K-Wert beträgt 25.6, das gewichtsmittlere Molekulargewicht beträgt 13500.

Copolymer 5 (erfindungsgemäß)

In einen 2-1-Glasreaktor mit Ankerrührer, 5 automatischen Zulaufdosiereinrichtungen, Rückflußkühler und Ölbadheizung wurden 523 g vollentsaltzes Wasser vorgelegt und unter Inertgas zum Sieden erhitzt. Zu dieser Lösung wurden gleichzeitig innerhalb 4 Stunden Zulauf 1, bestehend aus 192 g Methylpolyethylenglykolmethacrylat (mit mittlerem Ethoxilierungsgrad von 22) und 360 g vollentsalztem Wasser, Zulauf 2, bestehend aus 48 g Methacrylsäure, Zulauf 3, bestehend aus 72 g einer 33,3 %igen Lösung von Natriumphosphinat-Monohydrat in vollentsalztem Wasser, und Zulauf 4, bestehend aus 70,3 g einer 2,5%igen Lösung von Natriumperoxidisulfat in vollentsalztem Wasser, gleichmäßig zudosiert. Anschließend wurde die Reaktionsmischung noch 1 Stunde bei Siedetemperatur nachpolymerisiert. Danach wurden zu der Mischung 3,7 g ortho-Phthalsäurediglycidester zugegeben und 3 h unter Rühren zum Sieden erhitzt. Anschließend wurde die Mischung auf 30 °C abgekühlt und mit 42,2 g einer 50%igen Lösung von Natriumhydroxid in vollentsalztem Wasser neutralisiert. Es wurde eine gelbbraune Lösung des Polymeren mit pH 7,0 und einem Feststoffgehalt von 21,3 Gew.% erhalten. Der K-Wert beträgt 25.5, das gewichtsmittlere Molekulargewicht beträgt 13100.

Copolymer 6 (erfindungsgemäß)

In einen 2-1-Glasreaktor mit Ankerrührer, 5 automatischen Zulaufdosiereinrichtungen, Rückflußkühler und Ölbadheizung wurden 523 g vollentsaltzes Wasser vorgelegt und unter Inertgas zum Sieden erhitzt. Zu dieser Lösung wurden gleichzeitig innerhalb 4 Stunden Zulauf 1, bestehend aus 192 g Methylpolyethylenglykolmethacrylat (mit mittlerem Ethoxilierungsgrad von 22) und 360 g vollentsalztem Wasser, Zulauf 2, bestehend aus 48 g Methacrylsäure, Zulauf 3, bestehend aus 60 g einer 50 Gew.% igen Lösung von Phosphonsäure in vollentsalztem Wasser, und Zulauf 4, bestehend aus 70,3 g einer 2,5%igen Lösung von Natriumperoxidisulfat in vollentsalztem Wasser, gleichmäßig zudosiert. Anschließend wurde die Reaktionsmischung noch 1 Stunde bei Siedetemperatur nachpolymerisiert. Es wurde eine rotbraune, klare Lösung des Polymeren mit pH 7,0 und einem Feststoffgehalt von 21,3 Gew.% erhalten. Der K-Wert beträgt 40,0, das gewichtsmittlere Molekulargewicht beträgt 36400.

Copolymer 7 (Vergleichsbeispiel)

Zur Herstellung von Zulauf 1 wurden in einem beheizbaren Kolben unter Stickstoff 52,26 g Maleinsäureanhydrid aufgeschmolzen und dazu 120,00 g Polyethylenglykol mit einem mittleren Ethoxilierungsgrad von 12 gegeben. Unter weiterem Rühren gab man hierzu anschließend : 0,02 g Hydrochinonmonomethylether, 1,33 g Dodecylmercaptan und 2,34 g Azoisobutyronitril. In einen 2-1-Glasreaktor mit Ankerrührer, 5 automatischen Zulaufdosiereinrichtungen, Rückflußkühler und Ölbadheizung wurden 120,00 g Polyethylenglykol (mit einem mittleren Ethoxilierungsgrad von 12) und 2,6 g Maleinsäureanhydrid gegeben. Der Reaktor wurde unter Stickstoffatmosphäre auf 100 °C Innentemperatur erwärmt. Zu dieser Lösung wurden gleichbeginnend innerhalb 1 Stunde Zulauf 1 (siehe oben) und Zulauf 2, bestehend aus 53,32 g Styrol, zudosiert. Anschließend wurde noch 1 Stunde bei 100 °C nachgerührt, 0,24 g Azodiisobutyronitril zugegeben und nochmals 1 Stunde bei 100 °C weitergerührt. Die Innentemperatur wurde dann auf 140 °C angehoben und innerhalb von 5 Minuten 25,66 g eines Propylenoxid-Ethylenoxid-Blockpolymerisates mit 30 Propylenoxid-Einheiten und 4 Ethylenoxid-Einheiten zugegeben. Die Mischung wurde zwei weitere Stunden unter Rühren bei 140 °C gehalten. Danach wurde auf 65°C abgekühlt und 470 g vollentsalztes Wasser zugegeben. Die Mischung kühlte man im Anschluß auf 25°C, gab 470,00 g vollentsalztes Wasser zu und neutralisierte mit 34,2 g 50%iger Natronlauge. Es wurde eine braune, stark trübe Lösung des Polymeren mit pH 7,0 und einem Feststoffgehalt von 41,5 Gew.% erhalten. Der K-Wert beträgt 20,2, das gewichtsmittlere Molekulargewicht beträgt 18600.

Copolymer 8 (erfindungsgemäß)

Zur Herstellung von Zulauf 1 wurden in einem beheizbaren Kolben unter Stickstoff 52,3 g Maleinsäureanhydrid aufgeschmolzen. Hierzu gab man 120 g Polyethylenglykol mit einem mittleren Ethoxilierungsgrad von 12. Unter weiterem Rühren wurden anschließend zugegeben: 0,02 g Hydrochinonmonomethylether, 1,33 g Dodecylmercaptan, 2,34 g Azoisobutyronitril und 17,4 g Phosphorige Säure (98 Gew.%ig). In einen 2-1-Glasreaktor mit Ankerrührer, 5 automatischen Zulaufdosiereinrichtungen, Rückflußkühler und Ölbadheizung wurden 120 g Polyethylenglykol mit einem mittleren Ethoxilierungsgrad von 12 und 2,6 g Maleinsäureanhydrid gegeben. Der Reaktor wurde unter Stickstoffatmosphäre auf 100 °C Innentemperatur erwärmt. Zu dieser Lösung wurden gleichzeitig beginnend während 1 Stunde Zulauf 1 (siehe oben) und Zulauf 2, bestehend aus 53,3 g Styrol, zudosiert. Anschließend wurde noch 1 Stunde bei 100 °C nachgerührt, 0,24 g Azodiisobutyronitril zugegeben und nochmals 1 Stunde bei 100 °C weitergerührt. Die Innentemperatur wurde dann auf 140 °C angehoben und innerhalb von 5 Minuten 25,66 g eines Propylenoxid-Ethylenoxid-Blockpolymerisates mit 30 Propylenoxid-Einheiten und 4 Ethylenoxid-Einheiten zugegeben. Die Mischung wurde zwei weitere Stunden unter Rühren bei 140 °C gehalten. Danach wurde auf 65 °C abgekühlt und 470 g vollentsalztes Wasser zugegeben. Die Mischung wurde im Anschluß auf 25 °C abgekühlt, 470 g vollentsalztes Wasser zugegeben und mit 34,2 g 50 %iger Natronlauge neutralisiert. Es wurde eine gelbbraune, leicht trübe Lösung des Polymeren mit pH 7,0 und einem Feststoffgehalt von 41,4 Gew.% erhalten. Der K-Wert beträgt 23.4, das gewichtsmittlere Molekulargewicht beträgt 21000.

Copolymer 9 (erfindungsgemäß)

In einen 2-1-Glasreaktor mit Ankerrührer, 5 automatischen Zulaufdosiereinrichtungen, Rückflußkühler und Ölbadheizung wurden 451 g vollentsalztes Wasser vorgelegt und unter Inertgas zum Sieden erhitzt. Zu dieser Lösung wurden gleichbeginnend innerhalb 4 Stunden Zulauf 1, bestehend aus 172,8 g Methylpolyethylenglykolmethacrylat (mit mittlerem Ethoxilierungsgrad von 22) und 360 g vollentsalztem Wasser, Zulauf 2, bestehend aus 43,2 g Methacrylsäure, Zulauf 3, bestehend aus 24 g 2-Acrylamido-2-methylpropansulfonäure und 72 g vollentsalztem Wasser, Zulauf 4, bestehend aus 60,00 g einer 20 %igen Lösung von Natriumphosphinat-Monohydrat in vollentsalztem Wasser, Zulauf 5, bestehend aus 70,3 g einer 5%igen Lösung von Natriumperoxidisulfat in vollentsalztem Wasser, gleichmäßig zudosiert. Anschließend wurde die Reaktionsmischung noch 1 Stunde bei Siedetemperatur nachpolymerisiert. Danach wurde die Mischung auf 30 °C abgekühlt und mit 49,5 g einer 50 %igen Lösung von Natriumhydroxid in vollentsalztem Wasser neutralisiert. Es wurde eine gelbbraune, leicht trübe Lösung des Polymeren mit pH 7,0 und einem Feststoffgehalt von 20,7 Gew.% erhalten. Der K-Wert beträgt 36,4, das gewichtsmittlere Molekulargewicht beträgt 29100.

Copolymer 10 (erfindungsgemäß)

In einen 2-1-Glasreaktor mit Ankerrührer, 5 automatischen Zulaufdosiereinrichtungen, Rückflußkühler und Ölbadheizung wurden 526 g vollentsalztes Wasser vorgelegt und unter Inertgas zum Sieden erhitzt. Zu dieser Lösung wurden gleichbeginnend während 4 Stunden Zulauf 1, bestehend aus 120 g Methylpolyethylenglykolmethacrylat (mit mittlerem Ethoxilierungsgrad von 45) und 360 g vollentsalztem Wasser, Zulauf 2, bestehend aus 120 g Methacrylsäure, Zulauf 3, bestehend aus 60 g einer 20 %igen Lösung von Natriumphosphinat-Monohydrat in vollentsalztem Wasser, Zulauf 4, bestehend aus 69,4 g einer 5%igen Lösung von Natriumperoxidisulfat in vollentsalztem Wasser, gleichmäßig zudosiert. Anschließend wurde die Reaktionsmischung noch 1 Stunde bei Siedetemperatur nachpolymerisiert. Danach wurde die Mischung auf 30 °C abgekühlt und mit 105,50 g einer 50 %igen Lösung von Natriumhydroxid in vollentsalztem Wasser neutralisiert. Es wurde eine braune, klare Lösung des Polymeren mit pH 7,0 und einem Feststoffgehalt von 21,4 Gew.% erhalten. Der K-Wert beträgt 42,8, das gewichtsmittlere Molekulargewicht beträgt 43200.

Copolymer 11 (Vergleichsbeispiel)

Analog Copolymer 1 wurde ein Copolymer durch Polmerisation von 192 g Methylpolyethylenglykolmethacrylat (mittlerer Ethoxilierungsgrad 22) und 48 g Methacrylsäure hergestellt. Im Unterschied zur Herstellung von Copolymer 1 wies Zulauf 3 folgende Zusammensetzung auf: 1,8 kg Mercaptoethanol, gelöst in 8 g vollentsalztem Wasser.

Man erhielt eine klare Polymerlösung mit pH 7,0, die einen Feststoffgehalt von 20,2 Gew.-% aufwies. Der K-Wert des Polymeren lag bei 31,3, das gewichtsmittlere Molekulargewicht betrug 19900.

Anwendungstechnische Prüfungen

Prüfverfahren für Betonverflüssiger auf Basis der DIN 1048 Teil 1 (Prüfung der Verflüssigungswirkung von Additiven bei Beton)

Geräte:

- Multi Flow Rührer Typ SE/GB (Elektromotor)
- Rührbehälter (h=20,7cm ; d=40,6cm)
- Ausbreittisch (700 mm x 700 mm mit beweglicher oberer Platte s. DIN 1048 Teil 1, 3.2.1.1)
- Kegelstumpfform (Innendurchmesser oben : 130 mm; Innendurchmesser unten: 200 mm; s. DIN 1048 Teil 1, 3.2.1.1)
- Luftporengehaltmeßgerät (s. DIN 1048 Teil 1, 3.5.1 ); Probenbehälter (h=8,3cm ; d=12,3cm) mit aufschraubbarem Druckmeßgerät
- Rütteltisch (elektrisch)
- Stoppuhr
- Holzstab (d=1,5cm ; 1=55cm)

- Handschaufel (Fassungsvermögen ca. 0,6L)
- Kunststoffwürfel-Form (Innenkantenlänge
  (L * B * H = 15cm * 15cm * 15cm; an einer Seite offen)

Einsatzstoffe:

Ansatz: Mischungsverhältnis Zement/Zuschlag 1:5,56 Sieblinie B 16

| | |
|---|---|
| Quarzsand F34 | 825 g |
| Quarzsand 0,15 - 0,6 mm | 1665 g |
| Quarzsand 0,5 - 1,25 mm | 2715 g |
| Quarzsand 1,5 - 3,0 mm | 1485 g |
| Kies 3 - 8 mm | 3765 g |
| Kies 8 - 16 mm | 3330 g |
| Heidelberger Zement CEM I 32,5R | 2475 g |
| Trinkwasser | 1081 g |

Vertlussiger gem. Tabelle 1 (% Verflüssiger, bezogen als festes Polymer auf die Menge an eingesetztem Zement; "fest auf fest")

Anmerkungen:

Die mit dem Verflüssiger zugefügte Wassermenge muß vom Anteil des Trinkwassers subtrahiert werden. Das Verhältnis Wasser/Zement beträgt 0,44. Die Qualität des verwendeten Zementes erfolgt nach Sichtprüfung.

Durchführung der Prüfung:

a. Herstellung des Betons:

Die gesamte Menge an Zuschlagstoffen und Zement werden in den Rührbehälter eingewogen, und 1 min trocken mit dem Multi Flow Rührgerät gemischt. Danach gibt man unter Rühren innerhalb von 30 sek. zwei Drittel der berechneten Wassermenge zu. Innerhalb der nächsten 30 sek. wird das mit Verflüssiger versetzte restliche Drittel Wasser der Mischung zugegeben. Nun rührt der Beton noch drei Minuten nach. Die Herstellung der Betonmischung ist nach insgesamt 5 min abgeschlossen. Nach Herstellung des Betons wird der erste Wert zur Ermittlung des Ausbreitmaßes gemessen.

b. Ausbreitversuch:

Nach 5 min Rühren der fertigen Betonzusammensetzung erfolgt die erste Messung des Ausbreitmaßes. (s. DIN 1048 Teil 1, 3.2.1.2 Durchführung Ausbreitversuch). Nach Ermittlung des Ausbreitmaßes gibt man den Beton vom Ausbreittisch wieder zurück in den Rührbehälter. Der Beton wird nach insgesamt 29 Minuten 45 Sekunden nochmals 15 s durchgemischt. Die zweite Messung erfolgt nach genau 30 min. Dieser Vorgang wird nach insgesamt 60, 90, 120 min wiederholt bzw. solange bis der gemessene Wert des Ausbreitmaßes sich auf einen Durchmesser von unter 30cm verringert.

c. Luftporengehalt:

Der Luftgehalt von Frischbeton ist mit einem kalibrierten Prüfgerät von 1 1 Inhalt nach dem Druckausgleichverfahren zu messen. Die Bestimmung des Luftporengehaltes erfolgt nach der ersten und jeweiligen letzten Messung des Ausbreitmaßes. Dazu füllt man den 1 1-Behälter des Luftporengehaltmeßgerätes mit Beton, während der Beton 60 Sekunden auf einem Rütteltisch verdichtet wird. Der Behälter muß nach dem Rüttelvorgang randvoll mit Beton sein. (Durchführung s. DIN 1048 Teil 1, 3.5 Luftgehalt). Danach wird die Messung des Luftporengehaltes durchgeführt.

d. Druckfestigkeitsprüfung:

Aufgrund des Einflusses der zu prüfenden Betonverflüssiger auf die Abbindefähigkeit des Betons wird nach Bedarf eine Druckfestigkeitsprüfung durchgeführt. Die Druckfestigkeitsermittlung erfolgt an eigens hergestellten Probekörpern mit einer Kantenlänge von 15cm*15cm*15cm. Es werden von der Betonmischung mindestens zwei Würfel hergestellt. Die Herstellung der Probekörper erfolgt, indem man die Würfel zur Hälfte mit Beton füllt, den Beton 20 sek. auf dem Rütteltisch verdichtet, danach so viel Beton in die Würfelform einfüllt, daß nach einem weiteren Verdichten von 20 sek. die Betonoberfläche höher ist als der Rand der eigentlichen Form. Abschließend ebnet man die Oberfläche der Probekörper, damit diese mit der Höhe der Würfelform abschließt. Die Lagerung der Probekörper für die Druckfestigkeitsprüfung erfolgt in einem geschlossenen Raum bei ca. 23°C. Sie sind zunächst in ihren Formen abzustellen und durch Abdecken vor Feuchtigkeitsverlust zu schützen. Nach ca.18h werden die Würfel entschalt und nach 24h ab dem Herstellungszeitpunkt der Betonmischung wird ein Würfel mit Hilfe einer Presse abgedrückt. Der erreichte Wert in KN wird in $N/mm^2$ angegeben und gibt Aufschluß über die Festigkeit des Betons nach 24h. Nach einer Lagerungszeit des zweiten Betonwürfels von 28 Tagen ab Herstellung des Betons wird mit dem verbliebenen Probekörper genauso verfahren und die Druckfestigkeit nach 28 Tagen ermittelt.

Bemerkungen:

Vor jeder neuen Meßreihe ist ein Versuch ohne Verflüssiger-Zugabe (0-Wert) durchzuführen. Auch ist darauf zu achten, daß die Umgebungstemperatur konstant ist (23-25°C).

Tabelle 1:

| Ergebnisse | | | | | | | | | |
|---|---|---|---|---|---|---|---|---|---|
| Verflüssiger | Menge [%][1)] | Entschäumer[2)] [%][3)] | Ausbreitmaß in cm | | | | | LP[4)] [%] | Frühfestigkeit[5)] [$N/mm^2$] |
| | | | 3 min | 30 min | 60 min | 90 min | 120 min | | |
| ohne | | - | 20 | x[6)] | x | x | x | 2,5 | 29 |
| Ligninsulfonat | 0,75 | - | 30 | 20 | x | x | x | 3,0 | 30 |
| Naphthalinsulfonat | 0,75 | - | 37 | 31 | 28 | x | x | 2,8 | 30 |
| Melaminkondensat | 1,0 | - | 35 | 27 | x | x | x | 2,4 | 30 |
| Copolymer 1 | 0,24 | 1 | 55 | 40 | 34 | 31 | 29 | 2.6 | 32 |
| Copolymer 2 (V) | 0,24 | 1 | 47,5 | 30 | x | x | x | 2,9 | 31 |
| Copolymer 3 | 0,30 | - | 51 | 41 | 38 | 37 | x | 4,5 | 30 |
| Copolymer 3 | 0,24 | 1 | 55 | 40 | 34 | 31 | 29 | 2,6 | 32 |
| Copolymer 5 | 0,20 | - | 40 | 36 | 33 | 34 | x | 4,5 | 29 |
| Copolymer 7 (V) | 0,24 | - | 26 | x | x | x | x | 2,5 | 30 |
| Copolymer 11 (V) | 0,24 | 1 | 49 | 34 | 30 | x | x | 3,1 | 29 |

1) bezogen auf Zement (fest auf fest)
2) Tributylphosphat
3) bezogen auf festen Betonverflüssiger
4) Luftporengehalt
5) nach 24 h
6) keine Ausbreitung mehr festzustellen
V = Vergleichsbeispiel

Die Ergebnisse zeigen, daß mineralische Baustoffzubereitungen, die die erfindungsgemäßen Copolymere enthalten, auch bei einem Wasser/Zement-Verhältnis von 0,44 ein wesentlich längeres Zeitfenster aufweisen, in dem sie fließfähig sind, als mineralische Baustoffzubereitungen, die die Verflüssiger des Stands der Technik enthalten, ohne daß ein Verlust an Festigkeit in Kauf genommen werden muß.

## Patentansprüche

1. Verwendung wasserlöslicher oder in Wasser dispergierbarer Polymerisate, die Carboxylgruppen, gegebenenfalls in latenter Form, und Seitenketten der allgemeinen Formel I,

$$-X-Y[O(Alk-O)_n-R]_k \qquad (I)$$

enthalten, worin

k	für 1, 2, 3 oder 4 steht,

Y	eine Einfachbindung oder eine $C_1$-$C_4$-Alkyleneinheit bedeutet oder, wenn k ≠ 1 auch

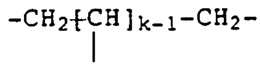

bedeuten kann,

X	für eine Einfachbindung oder eine Carbonylgruppe steht oder, wenn Y keine Einfachbindung ist, auch O, NR',

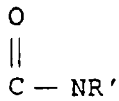 oder 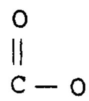

bedeuten kann, worin R' für Wasserstoff, $C_1$-$C_{20}$-Alkyl, $C_5$-$C_{10}$-Cycloalkyl, $C_6$-$C_{20}$-Aryl, $C_1$-$C_{20}$-Alkanoyl, $C_7$-$C_{21}$-Aroyl, $(Alk-O)_n$-R oder -Alk'-O$(Alk-O)_n$-R steht,

Alk	für $C_2$-$C_4$-Alkylen steht,

Alk'	für $C_1$-$C_4$-Alkylen steht, das gegebenenfalls auch eine OH-Gruppe trägt,

n	für eine Zahl im Bereich von 1 bis 300 steht wobei n ≥ 12 ist, wenn X für eine Einfachbindung steht, und n ≥ 2 ist, wenn X für eine Carbonylgruppe und Y für eine Einfachbindung steht,

R	Wasserstoff, $C_1$-$C_{20}$-Alkyl, $C_5$-$C_8$-Cycloalkyl, $C_6$-$C_{20}$-Aryl, $C_1$-$C_{20}$-Alkanoyl oder $C_7$-$C_{21}$-Aroyl bedeutet,

wobei die Polymerisate durch radikalische Copolymerisation ethylenisch ungesättigter Monomere A, die Carboxylgruppen enthalten, und ethylenisch ungesättigter Monomere B, die Seitenketten der allgemeinen Formel I aufweisen, sowie gegebenenfalls weiterer Monomere C in Gegenwart von 0.1 bis 50 Gew.%, bezogen auf die zu polymerisierenden Monomere, Phosphor enthaltenden Verbindungen,
oder durch radikalische Copolymerisation ethylenisch ungesättigter Monomere, die reaktive funktionelle Gruppen aufweisen, gegebenenfalls zusammen mit Monomeren A und/oder B und gegebenenfalls weiteren Monomeren C, in Gegenwart von 0.1 bis 50 Gew.%, bezogen auf die zu polymerisierenden Monomere, Phosphor enthaltenden Verbindungen und nachträgliche Umwandlung wenigstens eines Teils der reaktiven funktionellen Gruppen in Seitenketten der allgemeinen Formel I und/oder Carboxylgruppen, erhältlich sind,
als Additive in mineralischen Baustoffen.

**2.** Verwendung gemäß Anspruch 1, wobei die phosphorenthaltende Verbindung ausgewählt ist unter Phosphinsäure ($H_3PO_2$), Phosphonsäure ($H_3PO_3$) und den Salzen der genannten Säuren.

**3.** Verwendung gemäß einem der vorhergehenden Ansprüche, wobei die Polymerisate ein gewichtsmittleres Molekulargewicht $M_w$ im Bereich von 1000 bis 300.000 Dalton, insbesondere 5.000 bis 150.000 Dalton aufweisen.

**4.** Verwendung gemäß einem der vorhergehenden Ansprüche, worin k = 1 ist und X für eine Carbonylfunktion oder für

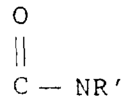 oder 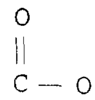

steht.

**5.** Verwendung gemäß einem der vorhergehenden Ansprüche, wobei die Polymerisate durch radikalische Copolymerisation zumindest der Monomere A und der Monomere B erhältlich sind, mit der Maßgabe, daß die Monomere B ausgewählt sind unter den Estern monoethylenisch ungesättigter $C_3$-$C_6$-Carbonsäuren mit Alkoholen der allgemeinen Formel II

$$H\{O)_p\text{-}Y\text{-}O\{Alk\text{-}O)_n\text{-}R \qquad (II)$$

worin Y, Alk, n und R die zuvorgenannten Bedeutungen besitzen und p = 1 ist oder, wenn Y für eine Einfachbindung steht, p = O ist
und/oder den Amiden monoethylenisch ungesättigter $C_3$-$C_6$-Carbonsäuren mit Aminen der allgemeinen Formel III, IIIa

$$H_2N\text{-}Alk'\text{-}O\{Alk\text{-}O)_n\text{-}R \qquad (III)$$

$$H_2N\{Alk\text{-}O)_n\text{-}R \qquad (IIIa)$$

worin Alk, Alk', n und R die zuvorgenannten Bedeutungen besitzen.

**6.** Verwendung gemäß Anspruch 5, wobei die Monomere A ausgewählt sind unter ethylenisch ungesättigten $C_3$-$C_6$-Monocarbonsäuren, $C_4$-$C_6$-Dicarbonsäuren, deren Anhydriden, deren Halbestern mit $C_1$-$C_{12}$-Alkanolen oder Alkoholen der allgemeinen Formel II, deren Halbamiden mit $NH_3$, mit primären $C_1$-$C_{12}$-Alkylaminen oder mit Aminen der allgemeinen Formeln III oder IIIa, sowie den Salzen der genannten Mono- und Dicarbonsäuren.

**7.** Verwendung gemäß einem der Ansprüche 1 bis 4, wobei die Polymerisate durch radikalische Copolymerisation zumindest der Monomere A und der Monomere B erhältlich sind, mit der Maßgabe, daß die Monomere B ausgewählt sind unter Verbindungen der allgemeinen Formel IV

$$R^2HC=CR^1\text{-}Y[O\{Alk\text{-}O)_n\text{-}R]_k \qquad (IV)$$

worin $R^1$, $R^2$ unabhängig voneinander für Wasserstoff oder $C_1$-$C_4$-Alkyl stehen und Y, Alk, R, k die zuvor genannten Bedeutungen besitzen und $n > 12$ ist.

**8.** Verwendung gemäß Anspruch 7, wobei die Monomere A ausgewählt sind unter den in Anspruch 6 angegebenen Monomeren.

**9.** Verwendung gemäß einem der Ansprüche 5 bis 8, wobei die zu polymerisierende Monomermischung

3 bis 50 Gewichts-% Monomere A
50 bis 97 Gewichts-% Monomere B und
0 bis 30 Gewichts-% Monomere C umfaßt.

**10.** Verwendung gemäß einem der Ansprüche 1 bis 4, wobei die Polymerisate durch radikalische Copolymerisation ethylenisch ungesättigter Monomere, die reaktive, funktionelle Gruppen aufweisen, in Gegenwart von 0,1 bis 50 Gew.-% Phosphor enthaltender Verbindungen, und nachträgliche Umwandlung wenigstens eines Teils der reaktiven, funktionellen Gruppen in Seitenketten der allgemeinen Formel I und/oder Carboxylgruppen, erhältlich sind,

worin die reaktiven, funktionellen Gruppen ausgewählt sind unter cylischen Anhydridgruppen und Oxirangruppen.

**11.** Verwendung gemäß Anspruch 10, wobei die ethylenisch ungesättigten Monomere mit reaktiven, funktionellen Gruppen ausgewählt sind unter Maleinsäureanhydrid, Citraconsäureanhydrid, Itaconsäureanhydrid 1,2,3,6-Tetrahydrophtalsäureanhydrid, Vinyl- und Allylglycidylether sowie den Glycidylestern ethylenisch ungesättigter $C_3$-$C_6$-Monocarbonsäuren.

**12.** Verwendung gemäß Anspruch 11, wobei die Copolymerisate erhältlich sind durch radikalische Copolymerisation der genannten Anhydride mit vinylaromatischen Verbindungen, $C_2$-$C_{12}$-Olefinen, $C_5$-$C_8$-Cycloolefinen und/oder Dienen und nachfolgende Umwandlung der Anhydridgruppen in Carboxylgruppen und Seitenketten der allgemeinen Formel I.

**13.** Verwendung gemäß einem der vorhergehenden Ansprüche, wobei das Polymerisat Struktureinheiten aufweist, die sich von Maleinimid ableiten, welches gegebenenfalls am Stickstoff mit $C_1$-$C_{20}$-Alkyl, $C_6$-$C_{20}$-Aryl oder $C_7$-$C_{20}$-Aralkyl substituiert ist.

**14.** Polymerisate, wie sie durch einen der Ansprüche 1 bis 13 definiert sind, wobei $n \geq 5$ ist, wenn X für eine Carbonylgruppe steht und $n > 12$ ist, wenn X für eine Einfachbindung steht.

**15.** Copolymerisate, die durch Polymerisation von Monomeren D, ausgewählt unter vinylaromatischen Verbindungen, $C_2$-$C_{12}$-Olefinen, $C_5$-$C_8$-Cycloolefinen und/oder Dienen, und Monomeren E, ausgewählt unter Maleinsäureanhydrid, Citraconsäureanhydrid, Itaconsäureanhydrid und 1,2,3,6-Tetrahydrophthalsäureanhydrid, in Gegenwart von 0,1 bis 50 Gew.% Phoshor enthaltender Verbindungen, bezogen auf die Monomere D und E, erhältlich sind.

**16.** Copolymerisate gemäß einem der Ansprüche 14 oder 15, die ein gewichtsmittleres Molekulargewicht $M_w$ im Bereich von 1.500 bis 30.000 aufweisen.

**17.** Copolymerisate gemäß einem der Ansprüche 14 bis 16, wobei das Monomer E Maleinsäureanhydrid ist.

**18.** Copolymerisate gemäß Anspruch 17, wobei die Monomere D ausgewählt sind unter 1-Buten, Isobuten und 1-Penten.

**19.** Verfahren zur Herstellung der wasserlöslichen oder in Wasser dispergierbaren Polymerisate nach Anspruch 14 durch radikalische Polymerisation ethylenisch ungesättigter Monomere A, die Carboxylgruppen enthalten, und ethylenisch ungesättigter Monomere B, die Seitenketten der allgemeinen Formel I aufweisen, sowie gegebenenfalls weiterer Monomere C, **dadurch gekennzeichnet, daß** man die Polymerisation in Gegenwart von 0,1 bis 50 Gew.% Phosphor enthaltender Verbindungen durchführt.

**20.** Verfahren gemäß Anspruch 19, **dadurch gekennzeichnet, daß** man die Polymerisation in Wasser oder in einer Mischung aus Wasser und bis zu 60 Gew.-%, bezogen auf die Mischung, aus einem OH-Gruppen enthaltenden Lösungsmittel, ausgewählt unter $C_1$-$C_4$-Alkanolen, $C_2$-$C_{10}$-Alkylenglykolen, worin die Alkylenkette durch ein oder mehrere, nicht benachbarte Sauerstoffatome unterbrochen sein kann, und Halbethern der $C_2$-$C_{10}$-Alkylenglykole mit $C_1$-$C_4$-Alkanolen, durchführt.

**21.** Verfahren zur Herstellung der wasserlöslichen oder in Wasser dispergierbaren Polymerisate nach Anspruch 14, durch radikalische Polymerisation ethylenisch ungesättigter Monomere, die reaktive funktionelle Gruppen enthalten, gegebenenfalls zusammen mit Monomeren A und/oder B und gegebenenfalls weiteren Monomeren C, **dadurch gekennzeichnet, daß** man die Monomere in Gegenwart von 0,1 bis 50 Gew.-%, bezogen auf die zu polymerisierenden Monomere, Phosphor enthaltender Verbindungen polymerisiert und anschließend die reaktiven funktionellen Gruppen in Carboxylgruppen und/oder Seitenketten der allgemeinen Formel I umwandelt.

**22.** Verfahren gemäß einem der Ansprüche 19 bis 21, **dadurch gekennzeichnet, daß** man die Hauptmenge, insbesondere mindestens 90 %, der Phosphor enthaltenden Verbindung während der Polymerisation kontinuierlich dem Reaktionsgefäß zuführt.

**23.** Verfahren zur Herstellung der Polymerisate wie in einem der Ansprüche 14 bis 18 definiert, **dadurch gekennzeichnet, daß** man Monomere D, ausgewählt unter vinylaromatischen Verbindungen, $C_2$-$C_{12}$-Olefinen, $C_5$-$C_8$-Cycloolefinen und/oder Dienen, und Monomere E, ausgewählt unter Maleinsäureanhydrid, Citraconsäureanhydrid,

Itaconsäureanhydrid und 1,2,3,6-Tetrahydrophthalsäureanhydrid, in Gegenwart von 0,1 bis 50 Gew.% Phosphor enthaltender Verbindungen, bezogen auf die Monomere D und E polymerisiert.

## Claims

**1.** Use of a water-soluble or water-dispersible polymer containing carboxyl groups, if desired in latent form, and side chains of the formula I,

$$-X-Y[O(Alk-O)_n-R]_k \qquad (I)$$

where

k is 1, 2, 3 or 4,

Y is a single bond or a $C_1$-$C_4$-alkylene unit or, when $k \neq 1$, can also be

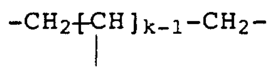

X is a single bond or a carbonyl group or, when Y is not a single bond, can also be O, NR',

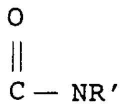 or 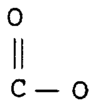

where R' is hydrogen, $C_1$-$C_{20}$-alkyl, $C_5$-$C_{10}$-cycloalkyl, $C_6$-$C_{20}$-aryl, $C_1$-$C_{20}$-alkanoyl, $C_7$-$C_{21}$-aroyl, $(Alk-O)_n$-R or -Alk'-O$(Alk-O)_n$-R,

Alk is $C_2$-$C_4$-alkylene,

Alk' is $C_1$-$C_4$-alkylene which may also bear an OH group,

n is a number in the range from 1 to 300, where $n \geq 12$ when X is a single bond and $n \geq 2$ when X is a carbonyl group and Y is a single bond,

R is hydrogen, $C_1$-$C_{20}$-alkyl, $C_5$-$C_8$-cycloalkyl, $C_6$-$C_{20}$-aryl, $C_1$-$C_{20}$-alkanoyl or $C_7$-$C_{21}$-aroyl,

where the polymer is obtainable by free-radical copolymerization of ethylenically unsaturated monomers A containing carboxyl groups and ethylenically unsaturated monomers B having side chains of the formula I and also, if desired, further monomers C in the presence of from 0.1 to 50 % by weight, based on the monomers to be polymerized, of phosphorus-containing compounds,
or by free-radical copolymerization of ethylenically unsaturated monomers containing reactive functional groups, if desired together with monomers A and/or B and, if desired, further monomers C, in the presence of from 0.1 to 50 % by weight, based on the monomers to be polymerized, of phosphorus-containing compounds and subsequent conversion of at least part of the reactive functional groups into side chains of the formula I and/or carboxyl groups, as additives in mineral building materials.

**2.** Use as claimed in claim 1, wherein the phosphorus-containing compound is selected from among phosphinic acid ($H_3PO_2$), phosphonic acid ($H_3PO_3$) and the salts of these.

**3.** Use as claimed in either of the preceding claims, wherein the polymer has a weight average molecular weight $M_w$

in the range from 1000 to 300,000 Dalton, in particular from 5,000 to 150,000 Dalton.

**4.** Use as claimed in any of the preceding claims, wherein k = 1 and X is a carbonyl function or

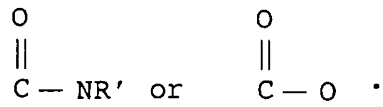

**5.** Use as claimed in any of the preceding claims, wherein the polymer is obtainable by free-radical copolymerization of at least the monomers A and the monomers B, with the proviso that the monomers B are selected from among the esters of monoethylenically unsaturated $C_3$-$C_6$-carboxylic acids with alcohols of the formula II

$$H\{O)_p\text{-Y-O}\{Alk\text{-}O)_n\text{-R} \qquad \text{(II)}$$

where Y, Alk, n and R are as defined above and p = 1 or, when Y is a single bond, p = 0
and/or the amides of monoethylenically unsaturated $C_3$-$C_6$-carboxylic acids with amines of the formulae III, IIIa

$$H_2N\text{-Alk'-O}\{Alk\text{-}O)_n\text{-R} \qquad \text{(III)}$$

$$H_2N\{Alk\text{-}O)_n\text{-R} \qquad \text{(IIIa)}$$

where Alk, Alk', n and R are as defined above.

**6.** Use as claimed in claim 5, wherein the monomers A are selected from among ethylenically unsaturated $C_3$-$C_6$-monocarboxylic acids, $C_4$-$C_6$-dicarboxylic acids, their anhydrides, their monoesters with $C_1$-$C_{12}$-alkanols or alcohols of the formula II, their monoamides with $NH_3$, with primary $C_1$-$C_{12}$-alkylamines or with amines of the formulae III and IIIa, and also the salts of said monocarboxylic and dicarboxylic acids.

**7.** Use as claimed in any of claims 1 to 4, wherein the polymer is obtainable by free-radical copolymerization of at least the monomers A and the monomers B, with the proviso that the monomers B are selected from among compounds of the formula IV

$$R^2HC{=}CR^1\text{-Y}[O\{Alk\text{-}O)_n\text{-R}]_k \qquad \text{(IV)}$$

where $R^1$, $R^2$ are, independently of one another, hydrogen or $C_1$-$C_4$-alkyl and Y, Alk, R, k are as defined above and n > 12.

**8.** Use as claimed in either claim 7, wherein the monomers A are selected from among the monomers specified in claim 6.

**9.** Use as claimed in any of claims 5 to 8, wherein the monomer mixture to be polymerized comprises

from 3 to 50 % by weight of monomers A,
from 50 to 97 % by weight of monomers B and
from 0 to 30 % by weight of monomers C.

**10.** Use as claimed in any of claims 1 to 4, wherein the polymer is obtainable by free-radical copolymerization of ethylenically unsaturated monomers containing reactive, functional groups in the presence of from 0.1 to 50 % by weight of phosphorus-containing compounds and subsequent conversion of at least some of the reactive, functional groups into side chains of the formula I and/or carboxyl groups, where the reactive, functional groups are selected from among cyclic anhydride groups and oxirane groups.

**11.** Use as claimed in claim 10, wherein the ethylenically unsaturated monomers containing reactive, functional groups are selected from among maleic anhydride, citraconic anhydride, itaconic anhydride, 1,2,3,6-tetrahydrophthalic anhydride, vinyl and allyl glycidyl ethers and also the glycidyl esters of ethylenically unsaturated $C_3$-$C_6$-monocarboxylic acids.

**12.** Use as claimed in claim 11, wherein the copolymer is obtainable by free-radical copolymerization of said anhydrides with vinylaromatic compounds, $C_2$-$C_{12}$-olefins, $C_5$-$C_8$-cycloolefins and/or dienes and subsequent conversion of the anhydride groups into carboxyl groups and side chains of the formula I.

**13.** Use as claimed in any of the preceding claims, wherein the polymer comprises structural units derived from maleimide which may be substituted on the nitrogen by $C_1$-$C_{20}$-alkyl, $C_6$-$C_{20}$-aryl or $C_7$-$C_{20}$-aralkyl.

**14.** A polymer as defined in any of claims 1 to 13, wherein $n \geq 5$ when X is a carbonyl group and $n > 12$ when X is a single bond.

**15.** A copolymer obtainable by polymerization of monomers D selected from among vinylaromatic compounds, $C_2$-$C_{12}$-olefins, $C_5$-$C_8$-cycloolefins and/or dienes and monomers E selected from among maleic anhydride, citraconic anhydride, itaconic anhydride and 1,2,3,6-tetrahydrophthalic anhydride in the presence of from 0.1 to 50 % by weight of phosphorus-containing compounds, based on the monomers D and E.

**16.** A copolymer as claimed in either of claims 14 or 15 having a weight average molecular weight $M_w$ in the range from 1,500 to 30,000.

**17.** A copolymer as claimed in any of claims 14 to 16, wherein the monomer E is maleic anhydride.

**18.** A copolymer as claimed in claim 17, wherein the monomers D are selected from among 1-butene, isobutene and 1-pentene.

**19.** A process for preparing the water-soluble or water-dispersible polymer as claimed in claim 14 by free-radical polymerization of ethylenically unsaturated monomers A containing carboxyl groups and ethylenically unsaturated monomers B containing side chains of the formula I and also, if desired, further monomers C, wherein the polymerization is carried out in the presence of from 0.1 to 50 % by weight of phosphorus-containing compounds.

**20.** A process as claimed in claim 19, wherein the polymerization is carried out in water or in a mixture of water and up to 60 % by weight, based on the mixture, of an OH-containing solvent selected from among $C_1$-$C_4$-alkanols, $C_2$-$C_{10}$-alkylene glycols, where the alkylene chain may be interrupted by one or more non-adjacent oxygen atoms, and monoethers of $C_2$-$C_{10}$-alkylene glycols with $C_1$-$C_4$-alkanols.

**21.** A process for preparing the water-soluble or water-dispersible polymer as claimed in claim 14 by free-radical polymerization of ethylenically unsaturated monomers containing reactive functional groups, if desired together with monomers A and/or B and, if desired, further monomers C, wherein the monomers are polymerized in the presence of from 0.1 to 50 % by weight, based on the monomers to be polymerized, of phosphorus-containing compounds and the reactive functional groups are subsequently converted into carboxyl groups and/or side chains of the formula I.

**22.** A process as claimed in any of claims 19 to 21, wherein the major part, in particular at least 90 %, of the phosphorus-containing compound is fed continuously into the reaction vessel during the polymerization.

**23.** A process for preparing the polymer as defined in any of claims 14 to 18, which comprises polymerizing monomers D selected from among vinylaromatic compounds, $C_2$-$C_{12}$-olefins, $C_5$-$C_8$-cycloolefins and/or dienes and monomers E selected from among maleic anhydride, citraconic anhydride, itaconic anhydride and 1,2,3,6-tetrahydrophthalic anhydride in the presence of from 0.1 to 50 % by weight of phosphorus-containing compounds, based on the monomers D and E.

**Revendications**

**1.** Utilisation de polymères solubles ou dispersibles dans l'eau, qui contiennent des groupes carboxyle, éventuellement sous forme latente, et des chaînes latérales de formule générale I,

$$-X-Y-[-O-(-Alk-O)_n-R]_k \quad (I)$$

dans laquelle

k vaut 1, 2, 3 ou 4,

Y est une liaison simple ou représente un motif alkylène en $C_1$-$C_4$ ou encore, quand $k \neq 1$, peut aussi représenter

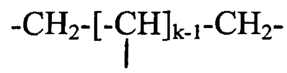

X est une liaison simple ou représente un groupe carbonyle ou encore, quand Y n'est pas une liaison simple, peut aussi représenter O, NR',

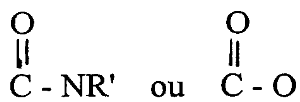

où R' est un atome d'hydrogène, un groupe alkyle en $C_1$-$C_{20}$, cycloalkyle en $C_5$-$C_{10}$, aryle en $C_6$-$C_{20}$, alcanoyle en $C_1$-$C_{20}$, aroyle en $C_7$-$C_{21}$, $-(Alk-O)_n-R$ ou $-Alk'-O-(-Alk-O)_n-R$,

Alk est un groupe alkylène en $C_2$-$C_4$,

Alk' est un groupe alkylène en $C_1$-$C_4$ qui éventuellement porte aussi un groupe OH,

n est un nombre compris entre 1 et 300, et $n \geq 12$ quand X est une liaison simple, et $n \geq 2$ quand X est un groupe carbonyle et Y est une liaison simple,

R est un atome d'hydrogène, un groupe alkyle en $C_1$-$C_{20}$, cycloalkyle en $C_5$-$C_8$, aryle en $C_6$-$C_{20}$, alcanoyle en $C_1$-$C_{20}$ ou aroyle en $C_7$-$C_{21}$,

les polymères pouvant être obtenus par copolymérisation radicalaire de monomères A à insaturation éthylénique contenant des groupes carboxyle, et de monomères B à insaturation éthylénique comportant des chaînes latérales de formule générale I, et éventuellement d'autres monomères C, en présence de 0,1 à 50 % en poids, par rapport aux monomères à polymériser, de composés contenant du phosphore,

ou par copolymérisation radicalaire de monomères à insaturation éthylénique comportant des groupes fonctionnels réactifs, éventuellement en même temps que des monomères A et/ou B et éventuellement d'autres monomères C, en présence de 0,1 à 50 % en poids, par rapport aux monomères à polymériser, de composés contenant du phosphore, puis par conversion d'au moins une partie des groupes fonctionnels réactifs en chaînes latérales de formule générale I et/ou en groupes carboxyle,

en tant qu'additifs dans des matériaux de construction minéraux.

**2.** Utilisation selon la revendication 1, pour laquelle le composé contenant du phosphore est choisi parmi l'acide phosphinique ($H_3PO_2$), l'acide phosphonique ($H_3PO_3$) et les sels des acides mentionnés.

**3.** Utilisation selon l'une des revendications précédentes, pour laquelle les polymères ont une masse moléculaire moyenne en masse $M_w$ comprise entre 1000 et 300 000 daltons et en particulier entre 5000 et 150 000 daltons.

**4.** Utilisation selon l'une des revendications précédentes, pour laquelle k = 1 et X est une fonction carbonyle, ou

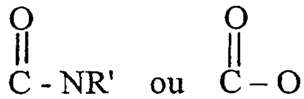

5. Utilisation selon l'une des revendications précédentes, pour laquelle les polymères peuvent être par copolymérisation radicalaire d'au moins les monomères A et les monomères B, à la condition que les monomères B soient choisis parmi les esters d'acides carboxyliques en $C_3$-$C_6$ à insaturation monoéthylénique et d'alcools de formule générale II

$$H\{O)_p\text{-}Y\text{-}O\{Alk\text{-}O)_n\text{-}R \qquad (II)$$

où Y, Alk, n et R ont les significations données ci-dessus et p = 1, ou encore, quand Y est une liaison simple, p = 0,
et/ou les amides d'acides carboxyliques en $C_3$-$C_6$ à insaturation éthylénique ayant les formules générales III, IIIa

$$H_2N\text{-}Alk'\text{-}O\{Alk\text{-}O)_n\text{-}R \qquad (III)$$

$$H_2N\{Alk\text{-}O)_n\text{-}R \qquad (IIIa)$$

dans lesquelles Alk, Alk', n et R ont les significations données ci-dessus.

6. Utilisation selon la revendication 5, pour laquelle les monomères A sont choisis parmi les acides monocarboxyliques en $C_3$-$C_6$ à insaturation éthylénique, les acides dicarboxyliques en $C_4$-$C_6$, leurs anhydrides, leurs semi-esters avec des alcanols en $C_1$-$C_{12}$ ou des alcools de formule générale II, leurs semi-amides avec $NH_3$, avec des alkylamines primaires en $C_1$-$C_{12}$ ou avec des amines de formule générale III ou IIIa, ainsi que les sels des acides mono- et dicarboxyliques mentionnés.

7. Utilisation selon l'une des revendications 1 à 4, pour laquelle les polymères peuvent être obtenus par copolymérisation radicalaire d'au moins les monomères A et les monomères B, à la condition que les monomères B soient choisis parmi les composés de formule générale IV

$$R^2HC{=}CR^1\text{-}Y[O\{Alk\text{-}O)_n\text{-}R]_k \qquad (IV)$$

dans laquelle $R^1$ et $R^2$ représentent chacun indépendamment de l'autre un atome d'hydrogène ou un groupe alkyle en $C_1$-$C_4$, et Y, Alk, R, k ont les significations données ci-dessus, et n > 12.

8. Utilisation selon la revendication 7, pour laquelle les monomères A sont choisis parmi les monomères indiqués dans la revendication 6.

9. Utilisation selon l'une des revendications 5 à 8, pour laquelle le mélange de monomères à polymériser contient

   3 à 50 % en poids de monomères A
   50 à 97 % en poids de monomères B et
   0 à 30 % en poids de monomères C.

10. Utilisation selon l'une des revendications 1 à 4, pour laquelle les polymères peuvent être obtenus par copolymérisation radicalaire de monomères à insaturation éthylénique comportant des groupes fonctionnels réactifs, en présence de 0,1 à 50 % en poids de composés contenant du phosphore, puis conversion d'au moins une partie des groupes fonctionnels réactifs en chaînes latérales de formule générale I et/ou en groupes carboxyle, où les groupes fonctionnels réactifs sont choisis parmi les groupes anhydride cyclique et les groupes oxiranne.

11. Utilisation selon la revendication 10, pour laquelle les monomères à insaturation éthylénique comportant des groupes fonctionnels réactifs sont choisis parmi l'anhydride maléique, l'anhydride citraconique, l'anhydride itaconique, l'anhydride 1,2,3,6-tétrahydrophtalique, le vinyl- et l'allylglycidyléther, ainsi que les éthers glycidyliques d'acides monocarboxyliques en $C_3$-$C_6$ à insaturation éthylénique.

**12.** Utilisation selon la revendication 11, pour laquelle les copolymères peuvent être obtenus par copolymérisation radicalaire des anhydrides mentionnés avec des composés vinylaromatiques, des oléfines en $C_2$-$C_{12}$, des cyclooléfines en $C_5$-$C_8$ et/ou des diènes, puis conversion des groupes anhydride en groupes carboxyle et chaînes latérales de formule générale I.

**13.** Utilisation selon l'une des revendications précédentes, pour laquelle le polymère comporte des motifs structuraux qui dérivent du maléimide, lequel est éventuellement substitué sur l'atome d'azote par des substituants alkyle en $C_1$-$C_{20}$, aryle en $C_6$-$C_{20}$ ou aralkyle en $C_7$-$C_{20}$.

**14.** Polymères tels que définis dans l'une des revendications 1 à 13, où $n \geq 5$ quand X est un groupe carbonyle et $n > 12$ quand X est une liaison simple.

**15.** Copolymères pouvant être obtenus par polymérisation de monomères D choisis parmi les composés vinylaromatiques, les oléfines en $C_2$-$C_{12}$, les cyclooléfines en $C_5$-$C_8$ et/ou les diènes, et de monomères E choisis parmi l'anhydride maléique, l'anhydride citraconique, l'anhydride itaconique et l'anhydride 1,2,3,6-tétrahydrophtalique, en présence de 0,1 à 50 % en poids, par rapport aux monomères D et E, de composés contenant du phosphore.

**16.** Copolymères selon l'une des revendications 14 ou 15, qui ont une masse moléculaire moyenne en masse $M_w$ comprise entre 1500 et 30 000.

**17.** Copolymères selon l'une des revendications 14 à 16, où le monomère E est l'anhydride maléique.

**18.** Copolymères selon la revendication 17, où les monomères D sont choisis parmi le 1-butène, l'isobutène et le 1-pentène.

**19.** Procédé de préparation de polymères solubles ou dispersibles dans l'eau selon la revendication 14 par polymérisation radicalaire de monomères A à insaturation éthylénique contenant des groupes carboxyle, et de monomères B à insaturation éthylénique, qui comportent des chaînes latérales de formule générale I, et éventuellement aussi d'autres monomères C, **caractérisé en ce qu'**on met en oeuvre la polymérisation en présence de 0,1 à 50 % en poids de composés contenant du phosphore.

**20.** Procédé selon la revendication 19, **caractérisé en ce qu'**on met en oeuvre la polymérisation dans de l'eau ou dans un mélange d'eau et d'une quantité allant jusqu'à 60 % en poids, par rapport au mélange, d'un solvant contenant des groupés OH, choisi parmi les alcanols en $C_1$-$C_4$, les alkylèneglycols en $C_2$-$C_{10}$, où la chaîne alkylène peut être interrompue par un ou plusieurs atomes d'oxygène non-voisins, et les semi-éthers des alkylèneglycols en $C_2$-$C_{10}$ et d'alcanols en $C_1$-$C_4$.

**21.** Procédé de préparation de polymères solubles ou dispersibles dans l'eau selon la revendication 14, par polymérisation radicalaire de monomères à insaturation éthylénique contenant des groupes fonctionnels réactifs, éventuellement en même temps que des monomères A et/ou B et éventuellement d'autres monomères C, **caractérisé en ce qu'**on polymérise les monomères en présence de 0,1 à 50 % en poids, par rapport aux monomères à polymériser, de composés contenant du phosphore, puis on convertit les groupes fonctionnels réactifs en groupes carboxyle et/ou chaînes latérales de formule générale I.

**22.** Procédé selon l'une des revendications 19 à 21, **caractérisé en ce qu'**on amène en continu au réacteur pendant la polymérisation la quantité principale, en particulier au moins 90 %, du composé contenant du phosphore.

**23.** Procédé de préparation des polymères selon l'une des revendications 14 à 18, **caractérisé en ce qu'**on polymérise des monomères D, choisis parmi les composés vinylaromatiques, les oléfines en $C_2$-$C_{12}$, les cyclooléfines en $C_5$-$C_8$ et/ou les diènes, et des monomères E choisis parmi l'anhydride maléique, l'anhydride citraconique, l'anhydride itaconique et l'anhydride 1,2,3,6-tétrahydrophtalique, en présence de 0,1 à 50 % en poids, par rapport aux monomères D et E, de composés contenant du phosphore.